# EUROPÄISCHE PATENTSCHRIFT

(11) **EP 3 246 149 B1**
(45) Veröffentlichungstag und Bekanntmachung des Hinweises auf die Patenterteilung: **19.12.2018**
(21) Anmeldenummer: 17178750.0
(22) Anmeldetag: 20.07.2015
(51) Int. Cl.: B29C 64/25, B29C 64/124, B29C 70/68, B33Y 30/00

(54) **SYSTEM ZUM BILDEN EINES FORMSTABILEN OBJEKTES DURCH SELEKTIVES, BEREICHSWEISES VERFESTIGEN EINER NICHT FORMSTABILEN MASSE**
SYSTEM FOR FORMING A DIMENSIONALLY STABLE OBJECT BY SELECTIVE, AREA-BASED FIXING OF A MASS WHICH IS NOT DIMENSIONALLY STABLE
SYSTÈME DE FORMATION D'UN OBJET DE FORME STABLE PAR CONSOLIDATION PARTIELLE, SÉLECTIVE D'UNE SUBSTANCE DE FORME NON STABLE

(30) Priorität: 22.07.2014 AT 5802014
(43) Veröffentlichungstag der Anmeldung: 22.11.2017
(62) Teilanmeldung aus: 15739578.1
(73) Patentinhaber: Way to Production GmbH, 1030 Wien (AT)
(72) Erfinder: Stadlmann, Klaus, 2514 Traiskirchen (AT)
(74) Vertreter: Puchberger & Partner Patentanwälte

(56) Entgegenhaltungen:
- EP-A1- 0 466 422
- DE-U1- 29 911 122
- US-A1- 2006 022 379

## Beschreibung

Die Erfindung betrifft ein System zum Bilden, insbesondere zum schichtweisen Bilden eines oder mehrerer formstabiler Objekte durch selektives bereichsweises Verfestigen einer nicht formstabilen Masse, wie insbesondere einer lichtaushärtbaren Flüssigkeit.

Die Erfindung betrifft insbesondere auch eine Anlage und eine Wanne zum schichtweisen Aufbau eines Körpers, wie sie beispielsweise in den österreichischen Patentanmeldungen AT50390/2013 und AT50391/2013 beschrieben ist.

Gemäß Stand der Technik sind sogenannte 3D-Drucker bekannt. Bei diesen Vorrichtungen wird beispielsweise eine pulverförmige oder flüssige Substanz durch Einwirkung von Licht- oder Wärmestrahlung selektiv ausgehärtet, um dadurch schichtweise einen festen Körper zu bilden. Bei diesen beispielsweise als Stereolithographie bekannten Verfahren werden fotosensitive Kunstharze oder Fotopolymere durch schichtweises selektives Aushärten Schicht für Schicht zu einem Körper geformt. Das Aushärten geschieht gemäß Stand der Technik in einem geschlossenen Gehäuse, um einerseits das Austreten intensiver Lichtstrahlung zu vermeiden und um andererseits bewegte Teile beim Druckvorgang abzuschirmen, sodass die Vorrichtung und die Bedienperson geschützt sind.

DE 299 11 122 U1 offenbart die Merkmale des Oberbegriffs des Anspruchs 1.

Nachteilig an herkömmlichen Konstruktionen ist, dass die Größe des zu bildenden Körpers durch die freie Größe im Inneren des Gehäuses begrenzt ist. Ein weiterer Nachteil herkömmlicher 3D-Drucker, bei denen eine Flüssigkeit durch Lichtstrahlung ausgehärtet wird, ist, dass in einem Arbeitsverfahren lediglich ein einziger Körper aus einer einzigen Flüssigkeit gebildet werden kann.

Aufgabe der Erfindung ist es nun, ein System, eine Vorrichtung und/oder gegebenenfalls ein Verfahren zum Bilden eines oder mehrerer formstabiler Objekte durch selektives bereichsweises Verfestigen einer nicht formstabilen Masse zu schaffen, dessen oder deren Flexibilität erhöht ist. Die Flexibilität umfasst einerseits, dass beliebige dreidimensionale Körper mit nahezu beliebiger Größe gebildet oder erweitert werden können. Die Flexibilität umfasst andererseits auch, dass mehrteilige Körper oder Körper aus zwei oder mehr unterschiedlichen Materialien oder Massen gebildet werden können.

Die Erfindung ermöglicht gegebenenfalls auch ein flexibles Andrucken oder Anbauen eines Objektes an einen wählbaren Basiskörper, wobei gegebenenfalls mehrere unterschiedliche Massen verwendet werden können, wobei gegebenenfalls ein Körper oder das aufgebaute Objekt von außen zugänglich ist oder zumindest teilweise außerhalb des Gehäuses angeordnet ist und wobei bevorzugt trotzdem eine ausreichende Abschirmung durch das Gehäuse gegeben ist.

Die erfindungsgemäße Aufgabe wird insbesondere durch die Merkmale der unabhängigen Patentansprüche gelöst.

Die Erfindung betrifft insbesondere ein System zum Bilden eines oder mehrerer formstabiler Objekte durch selektives bereichsweises Verfestigen einer nicht formstabilen Masse, wie insbesondere einer lichtaushärtbaren Flüssigkeit, umfassend insbesondere einen Grundkörper, der insbesondere ortsfest angeordnet ist; eine mit dem Grundkörper verbindbare oder verbundene Wanne zur Aufnahme der Masse; eine oder mehrere steuerbare Strahlungsquelle(n) zur Abgabe einer Strahlung, die zur Verfestigung der Masse geeignet ist und die insbesondere als Lichtquelle ausgebildet ist; einen Basiskörper, auf dem das zu bildende Objekt aufbaubar ist oder aufgebaut wird, eine Haltevorrichtung zur Aufnahme oder Halterung des Basiskörpers; ein Gehäuse, das gegebenenfalls die Wanne und bevorzugt auch die Strahlungsquelle umgibt; und/oder eine Bewegungsvorrichtung, die mit dem Grundkörper und mit der Haltevorrichtung verbunden oder gekoppelt ist, wobei die Bewegungsvorrichtung einen Antrieb umfasst, sodass die Haltevorrichtung durch Betätigung des Antriebs gegenüber dem Grundkörper bewegbar ist, wobei das Gehäuse mehrteilig ausgebildet ist, wobei ein erster Gehäuseteil mit dem Grundkörper verbunden ist und ein zweiter Gehäuseteil mit der Haltevorrichtung verbunden ist, sodass bei Relativbewegung der Haltevorrichtung gegenüber dem Grundkörper eine Relativbewegung zwischen erstem Gehäuseteil und zweitem Gehäuseteil bewirkt ist, und/oder wobei sich der in der Haltevorrichtung gehaltene oder aufgenommene Basiskörper nach außen erstreckt und/oder von außen zugänglich ist.

Gegebenenfalls ist vorgesehen, dass die Wanne nach oben geöffnet ist, dass die Wanne einen für die Strahlung der Strahlungsquelle durchlässigen Boden, insbesondere einen lichtdurchlässigen oder transparenten Boden aufweist, dass die Masse in der Wanne angeordnet oder anordenbar ist, dass der in der Haltevorrichtung gehaltene oder angeordnete Basiskörper zum Bilden eines oder mehrerer formstabiler Objekte von oben in die Masse eingetaucht oder an die Masse angelegt ist, dass die Strahlungsquelle(n) unterhalb der Wanne angeordnet und durch den Boden der Wanne Richtung Basiskörper gerichtet ist oder sind, oder dass die Strahlung der Strahlungsquelle(n) von unterhalb der Wanne und durch den Boden der Wanne Richtung Basiskörper gerichtet ist oder sind, und/oder dass zum Bilden eines oder mehrerer formstabiler Objekte die zwischen dem Boden der Wanne und dem Basiskörper vorgesehene Masse durch selektives bereichsweises Bestrahlen durch die Strahlungsquelle(n) verfestigbar ist oder verfestigt wird.

Gegebenenfalls ist vorgesehen, dass zur Bildung des Objektes oder der Objekte die Haltevorrichtung durch Betätigung der Bewegungsvorrichtung von einer ersten Stellung in eine zweite Stellung bringbar ist, wobei der dabei zurückgelegte Weg der Haltevorrichtung etwa der Höhe des bei dieser Bewegung aufgebauten Objektes entspricht.

Gegebenenfalls ist vorgesehen, dass die Haltevorrichtung durch Betätigung der Bewegungsvorrichtung von einer ersten Stellung in eine zweite Stellung bringbar ist, und dass die Haltevorrichtung durch Betätigung der Bewegungsvorrichtung in N zwischen der ersten Stellung und der zweiten Stellung liegende Zwischenstellungen bringbar ist, sodass das gebildete Objekt mehrere miteinander verbundene Schichten, insbesondere N+2 miteinander verbundene Schichten umfasst.

Gegebenenfalls ist vorgesehen, dass zur Bildung des oder der Objekte(s) die Haltevorrichtung und der zweite Gehäuseteil durch Betätigung der Bewegungsvorrichtung von einer ersten Stellung in eine zweite Stellung und gegebenenfalls in N Zwischenstellungen bringbar ist, wobei der dabei zurückgelegte Weg der Haltevorrichtung etwa der Höhe des aufgebauten Objektes entspricht, und dass sich der erste Gehäuseteil und der zweite Gehäuseteil in der ersten Stellung um eine Überlappungsstrecke überlappen, wobei die Überlappungsstrecke größer ist, als der zurückgelegte Weg der Haltevorrichtung, sodass der erste Gehäuseteil und der zweite Gehäuseteil einander auch in der zweiten Stellung überlappen, wobei die Gehäuseteile einander bevorzugt entlang ihres gesamten Umfanges überlappen.

Gegebenenfalls ist vorgesehen, dass das Gehäuse schachtelförmig ausgebildet ist, wobei der eine Gehäuseteil größer ausgebildet ist als der andere Gehäuseteil, sodass die beiden Gehäuseteile ineinander steckbar sind und zusammen in der ersten Stellung und in der zweiten Stellung zumindest die Wanne und bevorzugt auch die Strahlungsquelle umgeben oder abschirmen, und dass die beiden am System vorgesehenen Gehäuseteile bevorzugt in jeder Betriebsstellung zumindest die Wanne und bevorzugt auch die Strahlungsquelle umgeben, oder gegebenenfalls abschirmen, und einander überlappen.

Gegebenenfalls ist vorgesehen, dass der Basiskörper ein Objektträger ist, an dem das Objekt angebaut wird, dass der Basiskörper selbst ein aus einer Masse aufgebautes Objekt ist oder dass der Basiskörper ein Teil des Objektes oder ein Teil des durch Aufbau eines Objektes gefertigten Produktes ist.

Gegebenenfalls ist vorgesehen, dass das Gehäuse und insbesondere der zweite Gehäuseteil eine verschließbare Gehäuseöffnung aufweist, wobei die Gehäuseöffnung im Bereich der Haltevorrichtung angeordnet ist oder durch die Haltevorrichtung gebildet ist, und dass der Basiskörper durch die Gehäuseöffnung in das Gehäuse ragt.

Gegebenenfalls ist vorgesehen, dass das Gehäuse und insbesondere der zweite Gehäuseteil eine verschließbare Gehäuseöffnung aufweist und dass die Gehäuseöffnung durch den Basiskörper verschließbar oder verschlossen ist, sodass insbesondere ein im Wesentlichen geschlossenes Gehäuse gebildet ist.

Gegebenenfalls ist vorgesehen, dass die Gehäuseöffnung im oberen Teil des zweiten Gehäuseteils vorgesehen ist, und dass der Basiskörper von oben in das Gehäuse ragt.

Gegebenenfalls ist vorgesehen, dass das Gehäuse außenliegend ist und insbesondere von außen frei zugänglich ist.

Gegebenenfalls ist vorgesehen, dass der erste Gehäuseteil und der Grundkörper einstückig miteinander verbunden sind oder, dass der erste Gehäuseteil als eigenständiger Körper mit dem Grundkörper verbunden ist.

Gegebenenfalls ist vorgesehen, dass der Basiskörper von außen und nach außen entnehmbar angeordnet ist oder, dass der Basiskörper von außen und nach außen entnehmbar mit der Haltevorrichtung verbunden oder verbindbar ist.

Gegebenenfalls ist vorgesehen, dass die Bewegungsvorrichtung eine Führungsvorrichtung oder mehrere Führungsvorrichtungen umfasst, über die die Bewegung der Haltevorrichtung und des zweiten Gehäuseteils gegenüber dem Grundkörper geführt und insbesondere parallelgeführt ist.

Gegebenenfalls ist vorgesehen, dass die Wanne einen oder mehrere Trennsteg(e) umfasst, sodass zwei oder mehrere voneinander seitlich abgeteilte Teilwannen gebildet sind.

Gegebenenfalls ist vorgesehen, dass in zumindest zwei Teilwannen unterschiedliche Massen angeordnet sind, wobei sich die unterschiedlichen Massen beispielsweise durch unterschiedliche Zusammensetzungen, unterschiedliche Farben, unterschiedliche Füllstoffe, unterschiedliche Additive und/oder unterschiedliche Viskosität unterscheiden.

Gegebenenfalls ist vorgesehen, dass die oder zumindest eine Strahlungsquelle als Projektor, wie insbesondere als DLP-Projektor, als DMD-Projektor oder als LCD-Projektor, als halbleiterbasierte Lichtquelle wie insbesondere als Laserdiode und/oder als Bilddarstellungsfläche wie insbesondere als LED oder OLED-Display ausgebildet ist.

Gegebenenfalls ist vorgesehen, dass die Strahlungsquelle in einer zur aufzubauenden Schicht des Objektes parallelen Ebenen bewegbar und insbesondere angetrieben verfahrbar ist, sodass mehrere nebeneinander angeordnete Teilbereiche der Schicht nacheinander verfestigbar und miteinander verbindbar sind.

Gegebenenfalls ist vorgesehen, dass mehrere Strahlungsquellen vorgesehen sind, und dass gegebenenfalls eine oder mehrere Strahlungsquellen in einer zur aufzubauenden Schicht des Objektes parallelen Ebenen bewegbar und insbesondere angetrieben verfahrbar ist oder sind.

Gegebenenfalls betrifft die Erfindung ein System zum Bilden eines oder mehrerer formstabiler Objekte durch selektives bereichsweises Verfestigen einer nicht formstabilen Masse, wie insbesondere einer lichtaushärtbaren Flüssigkeit, umfassend einen Grundkörper, der insbesondere ortsfest angeordnet ist; eine mit dem Grundkörper verbindbare oder verbundene Wanne zur Aufnahme der Masse; eine oder mehrere steuerbare Strahlungsquelle(n) zur Abgabe einer Strahlung, die zur Verfestigung der Masse geeignet ist und die insbesondere als Lichtquelle ausgebildet ist; einen Basiskörper, auf dem das zu bildende Objekt aufbaubar ist oder aufgebaut wird, eine Haltevorrichtung zur Aufnahme oder Halterung des Basiskörpers; ein Gehäuse, das zumindest die Wanne und bevorzugt auch die Strahlungsquelle umgibt; eine Bewegungsvorrichtung, die mit dem Grundkörper und mit der Haltevorrichtung verbunden oder gekoppelt ist, wobei die Bewegungsvorrichtung einen Antrieb umfasst, sodass die Haltevorrichtung durch Betätigung des Antriebs gegenüber dem Grundkörper bewegbar ist, wobei der Basiskörper ein Teil eines Stempels ist, und dass das gebildete Objekt zumindest einen Teil der Stempelfläche bildet.

Gegebenenfalls ist vorgesehen, dass der Basiskörper ein Teil eines Stempels ist, und dass das gebildete Objekt zumindest einen Teil der Stempelfläche bildet.

Gegebenenfalls ist vorgesehen, dass der Basiskörper ein Teil eines Stempels ist, dass das Objekt zumindest einen Teil der Stempelfläche bildet, dass der Stempel einen Stempelgriff und eine Stempelfläche umfasst, und dass die gebildete Stempelfläche reliefartige Erhöhungen und Vertiefungen umfasst, deren Form und Verlauf durch eine Stempelfarbe auf ein Substrat stempelbar ist.

Gegebenenfalls ist vorgesehen, dass der Stempelgriff ein Teil des Basiskörpers ist, oder dass der Stempelgriff und die Stempelfläche Teile des gebildeten Objektes sind, wobei bevorzugt die Stempelfläche und der Stempelgriff aus unterschiedlichen Massen gebildet sind oder werden.

Gegebenenfalls ist vorgesehen, dass ein Handhabungsgerät vorgesehen ist, das zumindest einen bewegbaren Arm umfasst, dass der Arm des Handhabungsgerätes mit dem Basiskörper koppelbar oder gekoppelt ist, sodass durch Bewegung des Armes des Handhabungsgerätes auch der Basiskörper bewegbar ist.

Gegebenenfalls ist vorgesehen, dass der Arm gegenüber dem Grundkörper zumindest einen bevorzugt zwei angetriebene Freiheitsgrade aufweist, sodass der Basiskörper gegenüber der Haltevorrichtung bewegbar ist, wobei die Bewegung eine Drehbewegung um eine vertikale Achse, eine translatorische Hubbewegung zum Abheben des Basiskörpers von der Haltevorrichtung, eine translatorische Senkbewegung zum Aufsetzen des Basiskörpers auf die Haltevorrichtung und/oder eine Schwenkbewegung zur Entfernung des Basiskörpers von der Haltvorrichtung und dem Grundkörper ist.

Gegebenenfalls ist vorgesehen, dass zumindest ein Teil des Handhabungsgeräts starr mit dem Grundkörper verbunden ist, oder dass das Handhabungsgerät ein eigenständiges Modul ist, das über ein oder mehrere Zentriermittel zumindest teilweise gegenüber dem Grundkörper, dem Basiskörper oder der Haltevorrichtung lagezentriert ist.

Gegebenenfalls ist vorgesehen, dass in der Wanne ein Trennsteg vorgesehen ist, sodass durch den Trennsteg zumindest zwei Teilwannen gebildet sind,
oder dass in der Wanne mehrere Trennstege vorgesehen sind, sodass durch die Trennstege zumindest zwei oder mehr Teilwannen gebildet sind.

Gegebenenfalls ist vorgesehen, dass in einer ersten Teilwanne eine erste Masse vorgesehen ist, dass in einer zweiten Teilwanne eine zweite Masse vorgesehen ist, und dass die erste Masse aus einem Material gebildet ist, dessen Inhaltsstoffe sich zumindest teilweise von den Inhaltsstoffen oder deren Konzentrationen der zweiten Masse unterscheiden.

Gegebenenfalls ist vorgesehen, dass die Teilwannen seitlich voneinander durch einen oder mehrere Trennstege abgetrennt sind, sodass eine selbsttätige Durchmischung einer ersten Masse, die in der ersten Teilwanne vorgesehen ist und einer zweiten Masse, die in einer zweiten Teilwanne vorgesehen ist, verhindert ist.

Gegebenenfalls ist vorgesehen, dass der oder die Trennstege einstückig mit der Wanne verbunden sind, oder dass der oder die Trennstege form- oder stoffschlüssig mit der Wanne verbunden sind oder werden.

Gegebenenfalls ist vorgesehen, dass die Wanne und die Trennstege aus einem elastischen Material gebildet sind, wobei das elastische Material beispielsweise Silikon enthält und insbesondere eine Silikonmischung ist.

Gegebenenfalls ist vorgesehen, dass zur Verbindung der Wanne mit dem Grundkörper Verbindungselemente vorgesehen sind.

Gegebenenfalls ist vorgesehen, dass die Verbindungselemente Freistellungen umfassen, wobei diese Freistellungen insbesondere dazu eingerichtet und/oder geeignet sind, mit Elementen des Grundkörpers verbunden zu werden, wobei die Elemente des Grundkörpers, die in die Verbindungselemente der Wanne eingreifen, gegebenenfalls bewegbar angeordnet sind, sodass ein Spannen der Wanne, ein Wölben der Wanne, ein Verschieben der Wanne und/oder ein Entspannen der Wanne über Bewegung der Elemente des Grundkörpers erfolgen kann.

Gegebenenfalls ist vorgesehen, dass die Verbindungselemente magnetische oder magnetisierbare Elemente aufweisen, wobei diese Elemente insbesondere dazu eingerichtet sind, eine magnetische Verbindung der Wanne mit dem Grundkörper zu ermöglichen.

Gegebenenfalls ist vorgesehen, dass die Freistellungen vertikal von unten in die Seitenbereiche der Wanne verlaufen, wobei die Seitenbereiche der Wanne insbesondere seitlich auskragenden Laschen sind.

Gegebenenfalls ist vorgesehen, dass die Freistellungen Hinterschneidungen aufweisen, die insbesondere im Wesentlichen waagrecht in das Wannenmaterial verlaufen, sodass über Hakenelemente eine Arretierung der Wanne gegenüber dem Grundkörper erfolgen kann.

Gegebenenfalls ist vorgesehen, dass der zweite Gehäuseteil mit der Haltevorrichtung verbunden ist, sodass der zweite Gehäuseteil ein Teil der Haltevorrichtung ist, und dass der Basiskörper von dem zweiten Gehäuseteil gehalten und bewegbar ist.

Gegebenenfalls ist vorgesehen, dass die Haltevorrichtung eine rahmenförmig ausgebildet Komponente umfasst, die eine Freistellung aufweist, durch die die Wanne bevorzugt waagrecht hindurchführbar und mit dem Grundkörper verbindbar ist, dass der zweite Gehäuseteil von der rahmenförmig ausgebildeten Komponente gehalten und gegebenenfalls bewegt wird oder ist, und dass der Basiskörper von der Haltevorrichtung und/oder dem Gehäuse gehalten ist.

Gegebenenfalls ist vorgesehen, dass die Bewegungsvorrichtung an der rahmenförmigen Komponente angreift.

Das erfindungsgemäße System umfasst bevorzugt mehrere Komponenten. Durch das synergetische Zusammenspiel zweier oder mehrerer dieser Komponenten wird die erfindungsgemäße Aufgabe gelöst.

Das erfindungsgemäße System umfasst bevorzugt einen Grundkörper. Der Grundkörper ist insbesondere ortsfest angeordnet und beispielsweise auf einem festen Untergrund, wie einem Boden oder einem Tisch abstellbar oder angeordnet. Am Grundkörper können Bedienelemente vorgesehen sein. Diese Bedienelemente umfassen beispielsweise Schalter, die dazu eingerichtet sind, auf die Funktion des erfindungsgemäßen Systems Einfluss zu nehmen. Insbesondere können diese Schalter Ein/Aus-Schalter oder Funktionsschalter zum Starten der Bildung des Objektes oder für andere Funktionen sein. Ferner kann am Grundkörper eine Anzeigevorrichtung wie insbesondere ein grafisches Display vorgesehen sein. Auf diesem Display können Informationen über den Herstellungsprozess ausgegeben werden. Beispielsweise kann diese Anzeigevorrichtung Informationen zum Objekt, zum Produktionsfortschritt oder zu weiteren Parametern darstellen. Gegebenenfalls umfasst die Anzeigevorrichtung eine berührungsempfindliche Anzeigevorrichtung wie insbesondere ein Touchscreen.

Ferner können weitere Komponenten wie beispielsweise die Wanne, eine Bewegungsvorrichtung, ein Teil des Gehäuses, eine Strahlungsquelle, ein Handhabungsgerät oder weitere Komponenten am Grundkörper vorgesehen oder mit dem Grundkörper verbunden sein.

Bevorzugt umfasst das erfindungsgemäße System eine Wanne. Diese Wanne ist dazu eingerichtet und/oder geeignet, die Masse aufzunehmen, aus der das zu bildende Objekt gebildet wird. Die Wanne kann insbesondere gemäß den österreichischen Patentanmeldungen AT50390/2013 und AT50391/2013 ausgebildet sein. Bevorzugt weist die Wanne einen Boden auf, der für die Strahlung der Strahlungsquelle durchlässig ist, sodass von der Strahlungsquelle ausgehende Strahlung durch den Boden der Wanne auf die in der Wanne befindliche Masse wirken kann. Gegebenenfalls ist der Boden der Wanne lichtdurchlässig. Gegebenenfalls ist der Boden der Wanne transparent. Bevorzugt sind zumindest ein Teil der Wanne und insbesondere der Boden der Wanne aus einem elastischen oder verformbaren Material gebildet, sodass der Boden durch mechanische Einwirkung weiterer Elemente verformbar ist. Durch diese Verformung kann die Ablösbarkeit des Objekts von dem Boden der Wanne verbessert sein.

Gegebenenfalls sind auch die Seitenwände der Wanne aus einem elastischen Material gebildet. Gegebenenfalls ist die Wanne einstückig aus einem elastischen, lichtdurchlässigen oder transparenten Material gebildet. Dadurch können beispielsweise die Produktionskosten der Wanne gesenkt werden. Darüber hinaus kann bei einer Wanne, deren Boden und Seitenwände elastisch ausgebildet sind, durch Verbiegung des Bodens und der Wanne das Ausschütten der in der Wanne befindlichen Masse erleichtert sein. Insbesondere wölbt sich gegebenenfalls eine Seitenwand schnabelförmig nach außen, wenn der Bodenbereich der Wanne gebogen wird. Durch die Bildung der schnabelförmigen Auswölbung kann ein zielgenaues Ausschütten der in der Wanne befindlichen Masse ermöglicht sein.

Gegebenenfalls umfasst die Wanne einen oder mehrere Trennstege, sodass zwei oder mehrere Teilwannen gebildet sind. Durch einen einzigen Trennsteg können beispielsweise zwei Teilwannen gebildet sein. In den beiden voneinander getrennten Teilwannen können beispielsweise unterschiedliche Massen angeordnet sein, um Objekte aus unterschiedlichen Massen zu bilden. Gegebenenfalls sind mehrere Trennstege vorhanden, sodass eine Vielzahl an voneinander seitlich abgetrennten Teilwannen gebildet ist. In den Teilwannen können unterschiedliche Massen oder auch dieselbe Masse angeordnet sein oder werden.

Die Trennstege können einstückig mit der Wanne verbunden sein bzw. ein Teil der Wanne sein. Gegebenenfalls sind die Trennstege nachträglich eingesetzte Stege. Gegebenenfalls sind die Trennstege nachträglich eingesetzte Stege, die form- oder stoffschlüssig mit der Wanne verbunden sind oder werden, und insbesondere mit der Wanne verklebt oder verschweißt sind.

Gegebenenfalls kann in allen Ausführungsformen der Basiskörper nach außen und von außen entfernt werden. Gegebenenfalls erstreckt sich in allen Ausführungsformen der Basiskörper nach außen. Gegebenenfalls kann in allen Ausführungsformen der Basiskörper ein Teil des Objektes oder ein Teil des zu bildenden Produktes sein.

Gemäß einer weiteren Ausgestaltung des erfindungsgemäßen Systems kann in allen Ausführungsformen ein beheizbarer oder beheizter Bauraum vorgesehen sein. Gegebenenfalls kann in allen Ausführungsformen das Innere des Gehäuses, die Masse, der Basiskörper, der Innenraum des zweiten Gehäuseteils und weitere Komponenten des Systems beheizbar oder beheizt sein. Als Heizvorrichtung können beispielsweise Strahler, insbesondere Heizstrahler, IR-Strahler oder induktive Heizvorrichtung etc. vorgesehen sein. Gegebenenfalls kann auch der Basiskörper beheizt sein oder werden. Gegebenenfalls sind diese Strahler im Inneren des Gehäuses auf die Masse 2 und insbesondere von unten auf die Masse gerichtet. Gegebenenfalls sind die Strahler von oben auf die Masse gerichtet. Gegebenenfalls ist ein Strahler oder sind mehrere Strahler mit der Haltevorrichtung verbunden, sodass diese bevorzugt mit der Haltevorrichtung mitbewegt werden können. Gegebenenfalls ist die Heizvorrichtung jedoch auch ein Heizelement, das über künstliche oder natürliche Konvektion Wärme an das Gehäuseinnere abgibt. Durch eine Beheizung der Masse kann insbesondere deren Konsistenz, beispielsweise deren Viskosität verändert werden, um den Aufbauprozess des Objektes zu optimieren. Insbesondere kann auch die Haftneigung der Masse an der Wanne optimiert werden.

Gegebenenfalls ist die Wanne durch ein Spritzgussverfahren hergestellt. Insbesondere sind die Wanne und gegebenenfalls die Trennelemente sowie die Teilwannen als ein einziger Wannenkörper gefertigt, der insbesondere durch ein Spritzgussverfahren und/oder ein Prägeverfahren gebildet ist. Bevorzugt ist die Wanne aus einem elastischen Material gebildet. Insbesondere ist oder enthält dieses Material Silikon.

Gegebenenfalls ist die Bewegungsvorrichtung derart ausgeführt, sodass eine im Wesentlichen freie Zugänglichkeit der Wanne von außen, bei abgehobenem zweiten Gehäuseteil, ermöglicht ist. Insbesondere sind die Elemente der Bewegungsvorrichtung stabförmig und schmal ausgeführt, sodass dazwischen freie Flächen vorgesehen sind, wodurch die Handhabung der innenliegenden Elemente der Vorrichtung erleichtert ist. So kann beispielsweise während des Aufbaus des Objektes der zweite Gehäuseteil abgenommen werden, um beispielsweise den Baufortschritt zu beobachten oder um eine Masse in die Wanne nachzufüllen.

In weiterer Folge wird die Erfindung anhand der Figuren und anhand konkreter Ausführungsbeispiele weiter beschrieben.

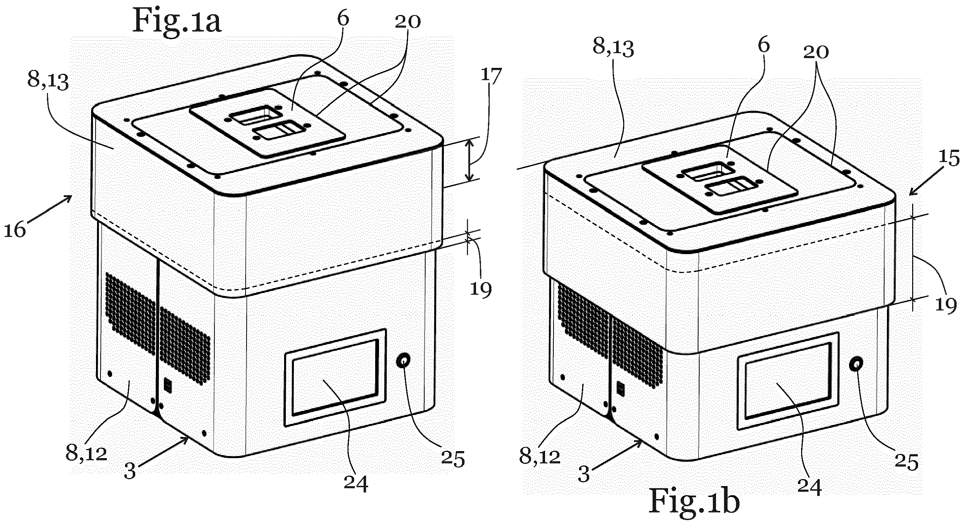

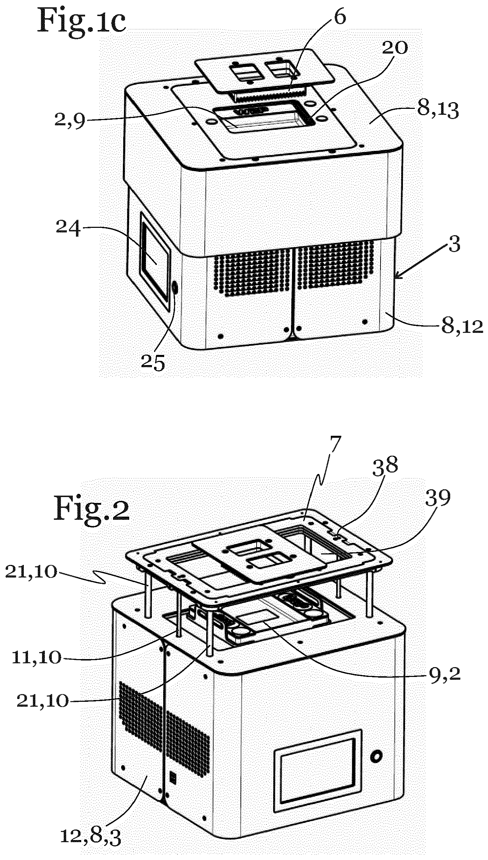

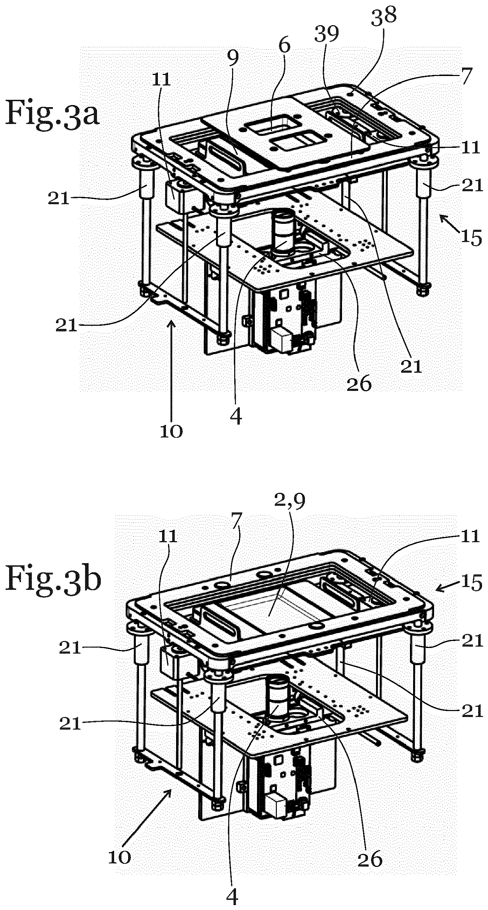

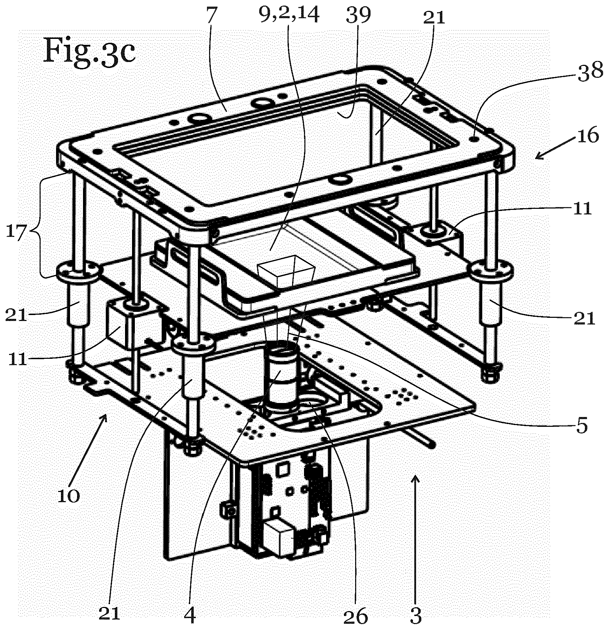

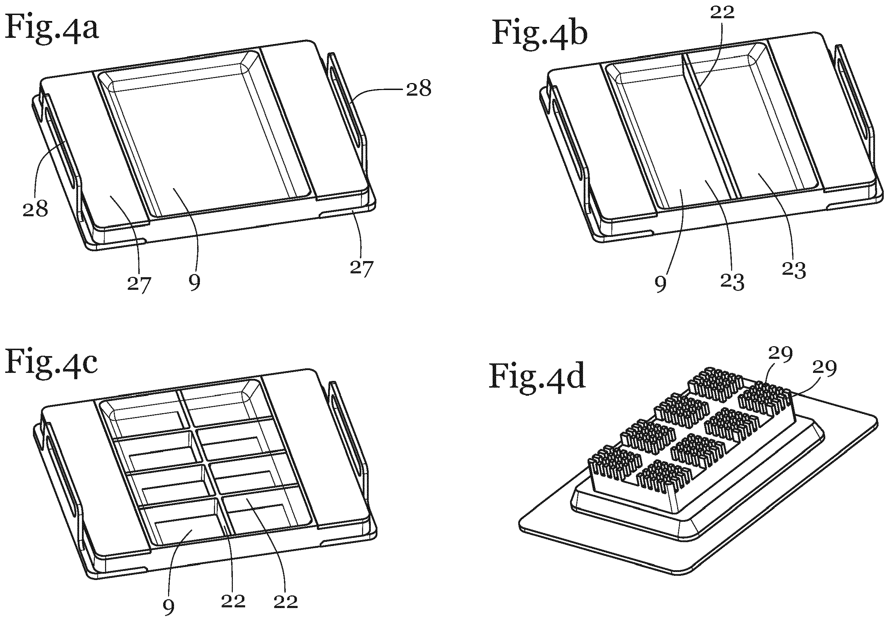

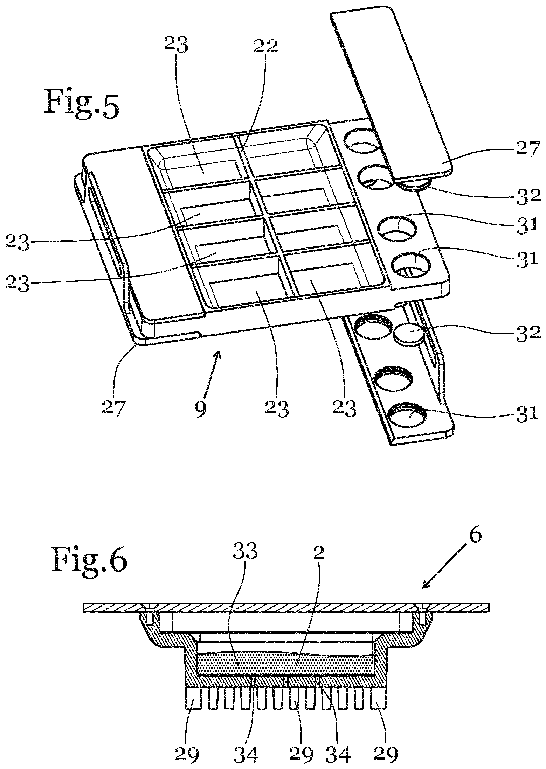

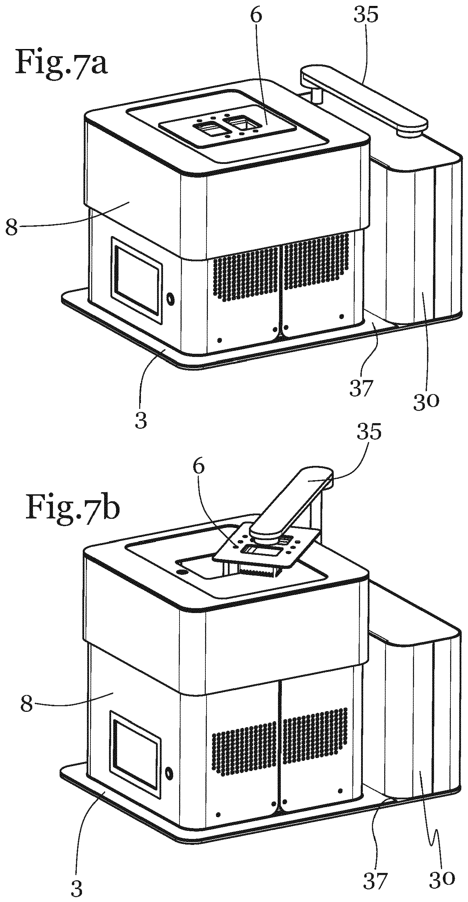

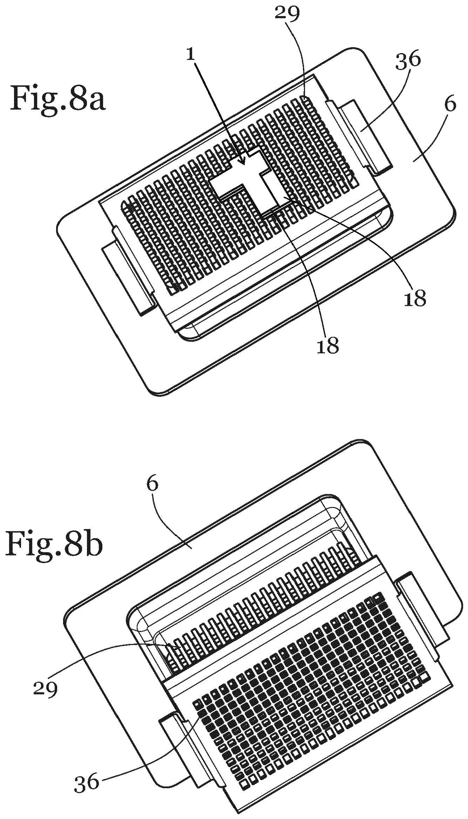

Die Fig. 1a, 1b und 1c zeigen Schrägansichten eines erfindungsgemäßen Systems von außen in unterschiedlichen Stellungen. Fig. 2 zeigt eine Schrägansicht des erfindungsgemäßen Systems, wobei einige Komponenten, insbesondere Teile des Gehäuses, ausgeblendet sind. Die Fig. 3a, 3b und 3c zeigen drei unterschiedliche Stellungen des erfindungsgemäßen Systems, wobei Teile des Gehäuses und des Grundkörpers sowie weitere Komponenten ausgeblendet sind. Fig. 4 zeigt mehrere Ansichten möglicher Ausgestaltungen einer Wanne und eines Basiskörpers. Fig. 5 zeigt Details einer Wanne. Fig. 6 zeigt eine mögliche Ausgestaltung eines Basiskörpers und insbesondere eines Objektträgers. Fig. 7 zeigt mehrere Ansichten eines erfindungsgemäßen Systems umfassend ein Handhabungsgerät. Fig. 8 zeigt eine weitere Ausführungsform eines erfindungsgemäßen Basiskörpers bzw. eines erfindungsgemäßen Objektträgers.

Die Fig. 1a, 1b und 1c zeigen eine Ausführungsform eines erfindungsgemäßen Systems umfassend einen Grundkörper 3 und ein Gehäuse 8. Das Gehäuse 8 ist mehrteilig ausgeführt. Insbesondere umfasst das Gehäuse 8 einen ersten Gehäuseteil 12 und einen zweiten Gehäuseteil 13. Am Gehäuse 8 und/oder am Grundkörper 3 können, wie in dieser Ausführungsform gezeigt, eine Anzeigevorrichtung 24 und/oder ein oder mehrere Bedienelemente 25 vorgesehen sein. Die Anzeigevorrichtung 24 kann als herkömmliche Anzeigevorrichtung wie beispielsweise als LCD-Anzeigevorrichtung ausgebildet sein. Gegebenenfalls ist die Anzeigevorrichtung auch eine berührungsempfindliche Anzeigevorrichtung und insbesondere ein Touchscreen. Bei einer Ausführung der Anzeigevorrichtung 24 als Touchscreen ist die Anzeigevorrichtung 24 selbst auch ein Bedienelement 25. Gegebenenfalls ist jedoch auch ein eigenständiges Bedienelement 25 vorgesehen. Derartige Bedienelemente können beispielsweise eine Einflussnahme auf die Steuerung des erfindungsgemäßen Systems ermöglichen.

Der Grundkörper 3 ist bevorzugt ortsfest angeordnet und kann beispielsweise auf einem festen Untergrund wie beispielsweise einem Tisch oder einem Boden abgestellt sein. Der Grundkörper 3 ist von einem Gehäuse 8 zumindest teilweise, bevorzugt vollständig umgeben. Gegebenenfalls sind im Gehäuse 8 Öffnungen, beispielsweise zum Ein- und Austritt von Kühlluft oder für Steckverbindungen, vorgesehen. Der Grundkörper 3 ist gegebenenfalls von einem ersten Gehäuseteil 12 umgeben oder einstückig mit einem ersten Gehäuseteil 12 verbunden. Ferner ist ein zweiter Gehäuseteil 13 vorgesehen. Dieser zweite Gehäuseteil 13 ist in bevorzugter Weise derart ausgebildet, dass er zusammen mit dem ersten Gehäuseteil 12 das Gehäuse 8 vervollständigend umgibt und somit ein im Wesentlichen geschlossenes Gehäuse 8 bildet. Der zweite Gehäuseteil 13 weist bevorzugt eine oder mehrere Gehäuseöffnungen 20 auf. Bevorzugt sind die Gehäuseöffnungen 20 oder ist die Gehäuseöffnung 20 verschließbar ausgeführt. Das Verschließen der Gehäuseöffnung 20 geschieht beispielsweise durch einen Deckel, der die Form des Gehäuses 8 oder das Gehäuse 8 vervollständigt.

Ferner ist ein Basiskörper 6 vorgesehen. Dieser Basiskörper 6 dient insbesondere dem An- oder Aufbau des zu bildenden Objektes 1. Bevorzugt ist der Basiskörper 6 von außerhalb des Gehäuses 8 zugänglich, entnehmbar oder entfernbar. Insbesondere erstreckt sich der Basiskörper 6 von außen in das Gehäuse 8. Dabei können, wie in der vorliegenden Ausführungsform, unterschiedlich große Gehäuseöffnungen 20 vorgesehen sein. Der Basiskörper 6 ist bevorzugt von einer in dieser Darstellung nicht sichtbaren Haltevorrichtung 7 gehalten. Die Haltevorrichtung 7 ist gemäß einer bevorzugten Ausführungsform über eine Bewegungsvorrichtung 10 - ebenfalls nicht sichtbar - gegenüber dem Grundkörper 3 bewegbar ausgebildet. Über die Bewegungsvorrichtung 10 ist das erfindungsgemäße System von einer ersten Stellung 15, wie beispielsweise in Fig. 1b gezeigt, in eine zweite Stellung 16 wie beispielsweise in Fig. 1a gezeigt, bringbar. Zwischen der ersten Stellung 15 und der zweiten Stellung 16 legt die Haltevorrichtung 7 einen Weg 17 zurück. Der bei der Bildung eines Objektes zurückgelegte Weg 17 entspricht etwa der Höhe des gebildeten Objektes.

Gegebenenfalls oder gemäß der vorliegenden Ausführungsform ist der zweite Gehäuseteil 13 mit der Haltevorrichtung 7 gekoppelt oder verbunden. Bei Bewegung der Haltevorrichtung 7 über die Bewegungsvorrichtung 10 wird auch der zweite Gehäuseteil 13 mitbewegt. Das Gehäuse 8 ist dadurch ausfahrbar oder teleskopförmig ausfahrbar ausgebildet. In der vorliegenden Ausführungsform ist das Gehäuse 8 schachtelförmig ausgebildet. Der erste Gehäuseteil 12 weist ein geringfügig kleineres Außenabmaß auf, als das Innenabmaß des zweiten Gehäuseteils 13. Dadurch kann der zweite Gehäuseteil 13 schachtelförmig über Teile des ersten Gehäuseteils 12 gestülpt oder geschoben werden. Es entspricht jedoch selbstverständlich auch dem Erfindungsgedanken, dass der erste Gehäuseteil 12 leichtes Übermaß gegenüber dem zweiten Gehäuseteil 13 aufweist.

Insbesondere überlappen einander die beiden Gehäuseteile 12, 13 um eine gewisse und bevorzugt um eine variable Überlappungsstrecke 19. Die Überlappungsstrecke 19 ist in allen Ausführungsformen insbesondere jene Strecke, um die sich die beiden Gehäuseteile überlappen also beispielsweise die Strecke zwischen dem unteren Rand des zweiten Gehäuseteils 13 bis zum oberen Rand des ersten Gehäuseteils 12. Die Überlappungsstrecke verläuft insbesondere entlang der Bewegungsrichtung der Relativbewegung der beiden Gehäuseteile 12, 13. Die Überlappungsstrecke 19 der ersten Stellung 15 ist in der vorliegenden Ausführungsform größer als die Überlappungsstrecke 19 der zweiten Stellung 16. In beiden Stellungen überlappen die beiden Gehäuseteile 12 und 13 einander, sodass das Gehäuse zu jedem Zeitpunkt, und/oder in jeder Betriebsstellung, im Wesentlichen geschlossen ausgebildet ist. Bevorzugt ist die Überlappungsstrecke 19 des Gehäuses in der ersten Stellung 15 größer als der zurückgelegte Weg 17 zur Bildung des Objektes.

Ein Vorteil der ausfahrbar ausgebildeten Gehäuseteile ist, dass das erfindungsgemäße System auf ein kleines Packmaß zusammengefahren werden kann. Dadurch kann im Gegensatz zu starren Gehäusen die Baugröße des erfindungsgemäßen Systems reduziert sein. Ein weiterer Vorteil der erfindungsgemäßen Ausgestaltung des Gehäuses und der Haltevorrichtung ist, dass sich der Basiskörper 6 nach außen erstrecken kann oder, dass der Basiskörper 6 von außen direkt zugänglich oder entnehmbar sein kann. Dadurch können sich das zu bildende Objekt 1 und/oder der Basiskörper 6 unabhängig von den Platzverhältnissen innerhalb des Gehäuses 8 nach außen erstrecken. Dadurch können Objekte 1 gebildet werden, die von ihrem Außenabmaß grundsätzlich nicht in das Gehäuse 8 passen würden.

Ferner können auch Basiskörper 6 verwendet werden, an die das Objekt 1 angebaut wird. Diese Basiskörper 6 können ebenfalls weitestgehend unabhängig von der Gehäusegröße ausgestaltet sein, da der Basiskörper 6 durch das Gehäuse 8 nach außen ragen kann.

Die Bewegungsvorrichtung 10 ist insbesondere dazu eingerichtet, eine translatorische Bewegung der Haltevorrichtung 7 gegenüber dem Grundkörper 3 auszuführen. Beispielsweise ist diese translatorische Bewegung eine Parallelverschiebung der Haltevorrichtung 7 gegenüber dem Grundkörper 3. Bevorzugt ist die Richtung der Bewegung im Wesentlichen senkrecht bzw. lotrecht gegenüber der Umwelt.

Die beiden Gehäuseteile sind bevorzugt schachtelförmig ausgeführt, wobei der zweite Gehäuseteil 13 gegebenenfalls haubenförmig ausgeführt ist und nach unten offen ist, sodass sich der zweite Gehäuseteil 13 um den Grundkörper 3 herum und insbesondere um den ersten Gehäuseteil 12 herum erstrecken kann. Bevorzugt weist der zweite Gehäuseteil 13 eine umlaufende Abschlusskante auf, die beispielsweise im unteren Bereich im Wesentlichen waagrecht verläuft.

Fig. 1c zeigt ein erfindungsgemäßes System mit abgehobenem Basiskörper 6. Unterhalb der Gehäuseöffnung 20 ist eine Wanne 9 vorgesehen. In der Wanne 9 befindet sich in der betriebsbereiten Stellung eine Masse 2. In der ersten Stellung 15 ist zumindest ein Teil des Basiskörpers 6 in die Masse 2 eingetaucht oder an die Masse 2 angelegt. Durch selektives Verfestigen der Masse 2 im Bereich des Basiskörpers 6 kann das Objekt 1 am Basiskörper 6 angebaut werden. Der Basiskörper 6 kann wie in der vorliegenden Ausführungsform als reiner Objektträger ausgebildet sein, der kein Teil des zu bildenden Objektes oder Produktes ist. In diesem Fall wird das zu bildende Objekt 1 nach der Bildung von dem als Objektträger ausgebildeten Basiskörper 6 abgenommen. Gegebenenfalls ist der Basiskörper 6 jedoch selbst ein durch das erfindungsgemäße System gebildetes Objekt 1. Gegebenenfalls ist der Basiskörper 6 ein Teil eines Produktes, wobei an den Basiskörper 6 das Objekt 1 angebaut wird.

Der Basiskörper 6 kann sich, wie in der vorliegenden Ausführung ersichtlich ist, bis außerhalb des Gehäuses oder bis nach außen erstrecken und ist somit in seiner Größe und Form nur geringfügig eingeschränkt.

Fig. 2 zeigt eine Schrägansicht eines erfindungsgemäßen Systems, wobei Teile des Gehäuses 8 ausgeblendet oder abgenommen sind. Insbesondere ist der zweite Gehäuseteil 13 ausgeblendet oder abgenommen. Gegebenenfalls ist der zweite Gehäuseteil 13 entfernbar mit der Haltvorrichtung verbunden oder gekoppelt, sodass durch einfaches Entfernen des zweiten Gehäuseteils 13, beispielsweise durch Abheben nach oben, innenliegende Komponenten des Systems zugänglich sind.

Der erste Gehäuseteil 12 umgibt oder bildet gegebenenfalls den Grundkörper 3 des Systems. Ferner ist eine Haltevorrichtung 7 vorgesehen. Die Haltevorrichtung 7 ist über eine Bewegungsvorrichtung 10 mit dem Grundkörper 3 verbunden oder gekoppelt. Die Bewegungsvorrichtung 10 umfasst in der vorliegenden Ausführungsform mehrere Elemente, über die die Beweglichkeit der Haltevorrichtung 7 gegenüber dem Grundkörper 3 ermöglicht ist.

Am Grundkörper 3 oder mit dem Grundkörper 3 verbunden ist eine Wanne 9 angeordnet. In der Wanne 9 befindet sich in bevorzugter Weise in ihrer betriebsbereiten Stellung eine Masse 2 oder mehrere Massen 2.

Die Figuren 3a, 3b und 3c zeigen ein erfindungsgemäßes System in unterschiedlichen Stellungen, wobei in den Ansichten der Figuren 3a, 3b, 3c der Grundkörper und das Gehäuse ausgeblendet sind. Auch weitere Komponenten, wie beispielsweise das Netzteil oder die Anzeigevorrichtung 24 sind ausgeblendet.

Die Figuren 3a, 3b, 3c zeigen Teile des erfindungsgemäßen Systems, insbesondere eine Haltevorrichtung 7 in einer ersten Stellung 15 bzw. einer zweiten Stellung 16, eine Strahlungsquelle 4, eine Bewegungsvorrichtung 10, Antriebe 11, Führungsvorrichtungen 21, eine Wanne 9 mit einer in der Wanne 9 vorgesehenen Masse 2.

Fig. 3a zeigt die Komponenten in einer ersten Stellung 15, wobei der Basiskörper 6 von der Haltevorrichtung 7 gehalten ist. Der Basiskörper 6 erstreckt sich wie in den vorangegangenen Ausführungsformen gegebenenfalls nach außen. Insbesondere ist der Basiskörper 6 in der vorliegenden Ausführungsform als Objektträger ausgebildet. Er weist in bevorzugter Weise einen nach außen weisenden Griff auf. Durch diesen Griff kann der Objektträger einfach nach außen abgenommen und entfernt werden. Gegebenenfalls kann jedoch in allen Ausführungsformen statt einem als Objektträger ausgebildeten Basiskörper 6 auch ein Basiskörper vorgesehen sein, der ein Teil des zu bildenden Objektes oder ein Teil des zu bildenden Produktes ist.

Um die Vorrichtung von der ersten Stellung 15 in die zweite Stellung 16 zu bringen, ist ein Antrieb 10 vorgesehen. Insbesondere sind in dieser Ausführungsform zwei Antriebe 10 vorgesehen, die bevorzugt beabstandet voneinander einerseits am Grundkörper und andererseits an der Haltevorrichtung 7 angreifen. Insbesondere sind die Antriebe 11 als Linearantriebe ausgebildet. Durch Betätigung des oder der Antriebe 11 wird eine Relativbewegung der Haltevorrichtung 7 gegenüber dem Grundkörper bewirkt. In der vorliegenden Ausführungsform sind die beiden Antriebe 11 an gegenüberliegenden Seiten der Haltevorrichtung 7 bzw. des Grundkörpers 3 angeordnet.

Ferner umfasst die Bewegungsvorrichtung 10 bevorzugt Führungsvorrichtungen 21. Diese Führungsvorrichtungen 21 umfassen beispielsweise langgestreckte Führungselemente, die beispielsweise durch Buchsen geführt sind.

In der vorliegenden Ausführungsform sind mehrere Führungsvorrichtungen 21 beabstandet voneinander vorgesehen. Die Beabstandung voneinander bewirkt insbesondere, dass ein Verkanten der Führungsvorrichtungen vermieden ist. Gegebenenfalls sind die Führungsvorrichtungen 21 an gegenüberliegenden Seiten der Haltevorrichtung 7 bzw. des Grundkörpers 3 vorgesehen. Bevorzugt sind drei oder vier Führungsvorrichtungen an den äußeren Seitenkanten bzw. Ecken der Haltevorrichtung 7 bzw. des Grundkörpers 3 vorgesehen.

Gegebenenfalls ist in allen Ausführungsformen vorgesehen, dass die Haltevorrichtung 7 eine rahmenförmig ausgebildet Komponente 38, insbesondere eine Rahmen 38 umfasst, die eine Freistellung 39 aufweist, durch die die Wanne 9 bevorzugt waagrecht hindurchführbar und mit dem Grundkörper 3 verbindbar ist. Dadurch kann eine mit einer flüssigen Masse 2 gefüllte Wanne 9 von oben in das Gehäuse eingebracht werden, ohne dass dabei die Flüssigkeit ausgeschüttet wird. Gegebenenfalls ist vorgesehen, dass der zweite Gehäuseteil 13 von der rahmenförmig ausgebildeten Komponente gehalten und gegebenenfalls bewegt ist, und dass der Basiskörper 6 von der Haltevorrichtung 7 und/oder dem Gehäuse 8 gehalten ist. Gegebenenfalls ist in allen Ausführungsformen vorgesehen, dass die Bewegungsvorrichtung 10 an der rahmenförmigen Komponente 38 angreift.

Über die Bewegungsvorrichtung 10 kann die Vorrichtung bzw. die Haltevorrichtung 7 von einer ersten Stellung 15 in eine zweite Stellung 16 gebracht werden. Dabei wird die Haltevorrichtung 7 gegenüber dem Grundkörper 3 verschoben. Insbesondere wird die Haltevorrichtung 7 gegenüber dem Grundkörper um einen zurückgelegten Weg 17 verschoben. Bevorzugt ist die Haltevorrichtung 7 gegenüber dem Grundkörper 3 parallel geführt. Bevorzugt wird dabei auch der zweite Gehäuseteil um denselben Weg 17 verschoben.

Ferner umfasst die Ausführungsform gemäß Fig. 3 eine Strahlungsquelle 4. Diese Strahlungsquelle 4 ist beispielsweise als Projektor ausgebildet. Die Strahlungsquelle 4 ist bevorzugt über einen oder mehrere Strahlungsquellenantriebe 26 verfahrbar bzw. bewegbar angeordnet. Die Bewegung der Strahlungsquelle geschieht insbesondere in einer zur zu bildenden Schicht eines Objekts 1 parallelen Ebene. In bevorzugter Weise ist dies eine waagrecht verlaufende Ebene. Gegebenenfalls sind zwei Strahlungsquellenantriebe vorgesehen, über die eine Strahlungsquelle in zwei Richtungen bewegt werden kann. Diese beiden Richtungen stehen insbesondere normal zueinander, sodass eine x-y-Verschiebung der Strahlungsquelle 4 in einer zur Objektschicht parallelen Ebene ermöglicht ist. Die Hauptrichtung der auf die Masse treffenden Strahlung der Strahlungsquelle 4 verläuft in dieser Ausführungsform bevorzugt lotrecht, insbesondere lotrecht von der Strahlungsquelle nach oben Richtung Masse 2. Gegebenenfalls ist die Hauptrichtung der auf die Masse treffenden Strahlung über ein optisches Element wie beispielsweise über einen Spiegel umgelenkt. In dieser Ausführungsform verläuft die Hauptrichtung der auf die Masse treffenden Strahlung der Strahlungsquelle 4 teilweise lotrecht und insbesondere trifft die Hauptrichtung der Strahlung lotrecht und bevorzugt von unten auf die Masse.

Die Wanne 9 ist bevorzugt mit dem Grundkörper 1 verbunden oder verbindbar. Durch Betätigung des Antriebs 11 wird die Haltevorrichtung 7 auch gegenüber der Wanne 9 bewegt.

Fig. 3b zeigt dieselbe Vorrichtung wie Fig. 3a, wobei in Fig. 3b der Basiskörper 6 ausgeblendet oder entfernt ist. Die dargestellten Teile der erfindungsgemäßen Vorrichtung befinden sich in der ersten Stellung 15.

Fig. 3c zeigt Teile der erfindungsgemäßen Vorrichtung in der zweiten Stellung 16. In dieser Stellung ist die Haltevorrichtung 7 gegenüber dem Grundkörper 3 und gegenüber der ersten Stellung 15 um einen zurückgelegten Weg 17 verschoben. Diese Verschiebung geschieht über die Betätigung des/oder der Antriebe 11. Bei der Verschiebung der Haltevorrichtung 7 kommt es auch zu einer Verschiebung der Haltevorrichtung gegenüber der Wanne 9. Diese Verschiebung kann schrittweise erfolgen. Insbesondere kann die Haltevorrichtung in einer Anzahl N zwischen der ersten und der zweiten Stellung liegenden Zwischenstellungen angehalten werden. Durch das schrittweise Bewegen der Haltevorrichtung gegenüber der Wanne und/oder gegenüber dem Grundkörper und gleichzeitiges oder zeitlich abgestimmtes Betätigen der Strahlungsquelle 4 kann ein schichtweiser Aufbau eines Objektes 1 erfolgen. Bevorzugt sendet die Strahlungsquelle die Strahlung in den Zwischenstellungen aus, in denen sich die Haltevorrichtung in Ruhestellung(en) befindet. Ferner ist schematisch auch die Strahlung 5 eingezeichnet, wie sie in allen Stellungen und Ausführungsformen vorgesehen sein kann. Auch der Boden 14 der Wanne kann in allen Ausführungsformen an dieser Stelle angeordnet sein.

Die Fig. 4a, 4b und 4c zeigen unterschiedliche Ausgestaltungsmöglichkeiten der Wanne 9. Fig. 4a zeigt eine erfindungsgemäße Wanne 9, die im Wesentlichen als eine durchgehende Wanne ausgebildet ist. Im Randbereich der Wanne sind Verbindungselemente 27 vorgesehen. Ferner umfasst die Wanne bevorzugt einen oder mehrere Griffe 28. Die Verbindungselemente 27 der Wanne 9 sind insbesondere dazu geeignet und eingerichtet, um mit dem erfindungsgemäßen System bzw. mit dem Grundkörper verbunden zu werden. Die Verbindungselemente 27 können beispielsweise Teile der Wanne und gegebenenfalls Ausnehmungen im Randbereich der Wanne sein. Gegebenenfalls umfassen die Verbindungselemente 27 weitere Elemente, wie beispielsweise starre Platten oder Zusatzkörper, die insbesondere dazu geeignet sind, die Stabilität oder die Handhabbarkeit der Wanne zu verbessern.

Fig. 4b zeigt eine Wanne 9, bei der ein Trennsteg 22 vorgesehen ist. Durch den Trennsteg 22 sind in der vorliegenden Ausführungsform zwei Teilwannen 23 gebildet. Die zwei Teilwannen 23 sind durch den Trennsteg 22 voneinander getrennt. Insbesondere ist eine seitliche, waagrechte Trennung vorgesehen, sodass sich zwei unterschiedliche Massen 2, wobei eine Masse 2 in der ersten Teilwanne und eine weitere Masse 2 in der zweiten Teilwanne vorgesehen ist, nicht selbsttätig miteinander vermischen und/oder voneinander getrennt sind.

Fig. 4c zeigt eine weitere Ausführungsform einer Wanne 9, bei der mehrere Trennstege 22 vorgesehen sind. Insbesondere sind durch die Trennstege 22 in dieser Ausführungsform acht Teilwannen 23 gebildet. Es versteht sich von selbst, dass in allen Ausführungsformen der Erfindung durch geeignete Wahl der Trennstege 22 eine beliebige Anzahl an Teilwannen 23 gebildet werden kann.

Gegebenenfalls sind die Trennstege 22 aller Ausführungsformen als nachträglich eingesetzte Trennstege ausgebildet. Diese können beispielsweise stoff- oder formschlüssig mit der Wanne 9 verbunden sein, um Teilwannen 23 zu bilden. Gegebenenfalls sind die Trennstege 22 einstückig mit der Wanne 9 verbunden und insbesondere als ein Teil der Wanne ausgebildet.

Gegebenenfalls ist die Wanne 9 zumindest teilweise aus einem elastischen Material gebildet. Auch die Trennstege 22 können in allen Ausführungsformen aus einem elastischen Material gebildet sein. Auch ein etwaiger Klebstoff, durch den Trennstege 22 mit der Wanne 1 verbunden sein können, weist bevorzugt eine gewisse Elastizität auf, um die Elastizität der gesamten Wanne und insbesondere der Klebestellen zu gewährleisten.

Fig. 4d zeigt eine mögliche Ausgestaltung des Basiskörpers 6. Insbesondere ist dieser Basiskörper dazu geeignet, mit der Wanne 9 aus Fig. 4c zusammenzuarbeiten. Jedoch ist dieser Basiskörper 6 grundsätzlich auch dazu geeignet mit den Wannen 9 der Figuren 4a und 4b eingesetzt zu werden.

Der in Fig. 4d dargestellte Basiskörper 6 weist eine Vielzahl an Fortsätzen 29 auf. Die Fortsätze 29 erstrecken sich bevorzugt parallel zueinander von einer Grundplatte des Basiskörpers 6 nach außen. In betriebsbereiter Stellung wird der Basiskörper von der Haltevorrichtung gehalten oder an die Haltevorrichtung angelegt. Die Fortsätze 29 ragen in dieser betriebsbereiten Stellung Richtung Wanne und insbesondere in oder an die Masse 2. Bevorzugt sind die Fortsätze 29 seitlich freigestellt. Dies hat gegebenenfalls den Vorteil, dass beim Eintauchen der Fortsätze 29 des Basiskörpers 6 weniger Masse 2 verdrängt werden muss, als wenn ein vollflächig ausgebildeter Körper in die Masse 2 eingetaucht wird. Dadurch ist das Anbauen des Objektes 1 an den Basiskörper 6 verbessert und erleichtert. Gegebenenfalls kann in allen Ausführungsformen der Basiskörper Richtung Masse auch glatt oder keilförmig ausgeführt sein.

Gegebenenfalls sind die Fortsätze 29 in Gruppen angeordnet. Diese Gruppen von Fortsätzen 29 sind bevorzugt gegenüber einander beabstandet und insbesondere seitlich beabstandet angeordnet. Bevorzugt sind die Gruppen derart voneinander beabstandet, sodass die Trennstege 22 der Wanne 9 in den freien Raum zwischen den Gruppen hineinragen können. Dadurch können in der Ausführungsform der Fig. 4d, in Kombination mit der Wanne der Fig. 4c, in einem Arbeitsverfahren acht unterschiedliche Objekte aus gegebenenfalls acht unterschiedlichen Massen gebildet werden. Bei einer Kombination des Basiskörpers 6 mit der Wanne aus Fig. 4b können beispielsweise mehrere Objekte aus zwei unterschiedlichen Massen gefertigt werden.

Gegebenenfalls ist ein Handhabungsgerät 30 insbesondere gemäß Fig. 7 vorgesehen, das eine Verlagerung des Basiskörpers 6 gegenüber der Wanne 9 oder gegenüber dem Grundkörper 3 ermöglicht. Diese Verlagerung kann je nach Ausgestaltung des Handhabungsgerätes in allen Raumrichtungen erfolgen. Dadurch kann eine Gruppe von Fortsätzen 29, beispielsweise bei einer Drehung des Basiskörpers um 180° um eine im Wesentlichen vertikale Achse, nacheinander mit unterschiedlichen Massen in Berührung kommen und somit ein oder mehrere Objekte 1 aus mehreren Massen 2 bilden.

Fig. 5 zeigt eine detaillierte Darstellung einer möglichen Ausgestaltung einer Wanne 9. Die Wanne 9 umfasst mehrere Trennstege 22, die einstückig mit dem Grundkörper der Wanne 9 verbunden sind. Durch die Trennstege 22 sind Teilwannen 23, in dieser Ausführungsform insbesondere acht Teilwannen 23, vorgesehen. In den unterschiedlichen Teilwannen 23 können gegebenenfalls unterschiedliche Massen 2 angeordnet werden, um Objekte 1 aus unterschiedlichen Massen 2 bilden zu können.

Die vorliegende Ausführungsform der Wanne 9 gemäß Fig. 5 umfasst Verbindungselemente 27. Die Verbindungselemente 27 können beispielsweise mehrteilig ausgeführt sein. Bevorzugt umfassen die Verbindungselemente 27 Freistellungen 31. Diese Freistellungen 31 sind insbesondere dazu eingerichtet und/oder geeignet, mit Elementen des Grundkörpers verbunden zu werden. Über die Verbindungselemente 27 geschieht die Verbindung der Wanne gegenüber dem Grundkörper der Vorrichtung. Gegebenenfalls sind die Verbindungselemente, die am Grundkörper angeordnet sind, und die in die Verbindungselemente 27 der Wanne eingreifen, bewegbar angeordnet, sodass gegebenenfalls ein Spannen der Wanne, ein Wölben der Wanne oder ein Entspannen der Wanne über Bewegung der Verbindungselemente des Grundkörpers erfolgen kann.

Gegebenenfalls weisen die Verbindungselemente 27 magnetische oder magnetisierbare Elemente 32 auf. Diese Elemente 32 sind insbesondere dazu eingerichtet, eine einfache Verbindung der Wanne mit dem Grundkörper zu ermöglichen. So kann die Wanne beispielsweise durch einfaches Aufsetzen von oben mit dem Grundkörper verbunden werden. Über magnetische Kräfte kann dann die Wanne am Grundkörper gehalten werden.

Die Freistellungen 31 verlaufen bevorzugt vertikal von unten in die Seitenbereiche der Wanne. Gegebenenfalls weisen die Freistellungen 31 jedoch auch Hinterschneidungen auf, die beispielsweise im Wesentlichen waagrecht in das Wannenmaterial verlaufen. Dadurch kann beispielsweise über Hakenelemente eine weitere Arretierung der Wanne gegenüber dem Grundkörper erfolgen.

Insbesondere soll die Wanne 9 gegen ein Abheben nach oben gesichert sein. Dies geschieht bevorzugt über magnetische Kräfte, Hinterschneidungen und/oder Hakenelemente, insbesondere über formschlüssige Elemente oder gegebenenfalls über reibschlüssige Verbindungen.

Fig. 6 zeigt eine weitere mögliche Ausgestaltung des Basiskörpers 6. Der Basiskörper 6 umfasst wiederum Fortsätze 29. Die Fortsätze 29 sind bevorzugt nach unten und besonders bevorzugt Richtung Masse 2 der Wanne 9 gerichtet. In dieser Ausführungsform umfasst der Basiskörper 6 ein Reservoir 33 zur Aufnahme einer Masse 2 oder eines Stoffes zur Beimengung in die Masse 2. Gegebenenfalls können auch mehrere voneinander getrennte Reservoirs vorgesehen sein. Ein Basiskörper mit einem Reservoir kann gegebenenfalls in allen Ausführungsformen vorgesehen sein. Das Reservoir 33 ist über Zuführöffnungen 34 gegebenenfalls mit jenem Bereich des Basiskörpers 6 verbunden, in dem die Fortsätze 29 angeordnet sind oder in dem das Objekt 1 gebildet wird. Über dieses Zusatzreservoir 33 und insbesondere über die Zuführöffnungen 34 kann eine Masse 2 oder ein Stoff von der Rückseite des Basiskörpers in jenen Bereich des Basiskörpers 6 geleitet werden, in dem das Objekt aufgebaut oder angebaut werden soll. Dadurch kann beispielsweise erzielt werden, dass die Zwischenräume zwischen den Fortsätzen 29 mit der Masse 2 gefüllt oder zumindest teilweise gefüllt sind. In weiterer Folge muss der Basiskörper 6 bzw. müssen die Fortsätze 29 nicht in die Masse eingetaucht werden, sondern es reicht, dass diese an die Masse angelegt werden. Dadurch kann die Verdrängung der Masse 2 in der Wanne 9 weiter verringert werden.

Gegebenenfalls ist das Reservoir derart ausgestaltet, dass der Basiskörper an seiner Oberseite hohl ausgeführt ist oder einen Hohlraum aufweist. Gegebenenfalls kann in dem Reservoir ein Zusatzstoff für die Masse 2 vorgesehen sein. Dieser Zusatzstoff kann beispielsweise einen Farbstoff, insbesondere Farbpigmente, ein oder mehrere Füllstoffe und/oder ein oder mehrere Additive sein oder enthalten. Dadurch kann während der Bildung des Objektes die Konsistenz oder die Zusammensetzung der Masse, insbesondere der in der Wanne befindlichen Masse verändert werden. Dazu kann in allen Ausführungsformen in den Zuführöffnungen 34 oder in der Zuführöffnung 34 ein Steuer- oder regelbares Ventil vorgesehen sein. Über Steuerung oder Regelung des Ventils kann die Zuführung des in dem Reservoir befindlichen Stoffs oder der Masse gesteuert oder geregelt werden. Beispielsweise kann dieser Stoff tropfenförmig in die Masse eingebracht werden. Gegebenenfalls ist ein Sprühkopf vorgesehen, sodass der Stoff, der im Reservoir vorgesehen ist, zerstäubt auf die Masse oder auf das Objekt aufgetragen werden kann.

Gegebenenfalls kann in der Wanne ein bewegbares Element vorgesehen sein, das die in der Wanne befindliche Masse entfernt oder beiseite schiebt. In einem weiteren Schritt kann über die Zuführöffnung oder die Zuführöffnungen eine weitere, zweite Masse zugeführt werden, die sich gegebenenfalls von der ersten Masse unterscheidet. Gegebenenfalls wird die erste Masse in einen Bereich der Wanne geschoben, in der kein Aufbau eines Objektes geschieht. Dadurch kann in einer einzigen Wanne oder in einer einzigen Teilwanne ein Objekt hergestellt werden, das aus unterschiedlichen Massen gebildet ist. Gegebenenfalls sind mehrere Reservoirs vorgesehen, die mehrere unterschiedliche Zusatzstoffe oder Massen enthalten. Beispielsweise können in mehreren Reservoirs unterschiedliche Farbstoffe angeordnet sein. Gegebenenfalls ist jedes Reservoir über eine Zuführungsöffnung mit dem Innenraum und insbesondere mit der Wanne verbunden, sodass der Stoff in die Wanne eingebracht werden kann. Gegebenenfalls sind für die unterschiedlichen Teilwannen unterschiedliche Reservoirs mit unterschiedlichen Zuführöffnungen vorgesehen. Gegebenenfalls ist in allen Ausführungsformen pro Teilwanne zumindest eine Zuführöffnung vorgesehen.

Gegebenenfalls ist pro Zuführöffnung oder pro Teilwanne ein Absperrelement vorgesehen, sodass die einzelnen Teilwannen unabhängig voneinander mit einer oder mehreren Stoffen aus dem Reservoir beschickt werden können. Gegebenenfalls sind diese Absperrelemente als Ventilsystem ausgeführt. Dieses Ventilsystem kann beispielsweise über eine Software gesteuert werden. Diese Ausführungsform kann insbesondere mit allen weiteren Ausführungsformen kombiniert werden.

Fig. 7, insbesondere Fig.7a und Fig.7b zeigen eine weitere Ausgestaltung eines erfindungsgemäßen Systems. Dieses umfasst in dieser Ausführungsform ein Handhabungsgerät 30. Das Handhabungsgerät 30 ist insbesondere dazu eingerichtet und/oder geeignet, über eine geeignete Steuerung den Basiskörper 6 in gewünschter Weise zu bewegen. Beispielsweise kann das Handhabungsgerät 30 als Wechselvorrichtung ausgebildet sein. Ein als Wechselvorrichtung ausgebildetes Handhabungsgerät 30 ist insbesondere dazu geeignet, einen Basiskörper 6 von der Haltevorrichtung abzunehmen und gegebenenfalls an einer anderen Stelle abzulegen. Darüber hinaus ist das Handhabungsgerät 30 in dieser Ausführungsform gegebenenfalls dazu geeignet, einen neuen, zweiten Basiskörper 6 von einer Ablage oder einem Magazin abzunehmen und mit der Haltevorrichtung zu verbinden oder zu koppeln. Dadurch können automatisiert mehrere Objekte 1 an mehreren Basiskörpern gebildet werden.

Gegebenenfalls ist das Handhabungsgerät 30 dazu eingerichtet und/oder geeignet, einen (einzigen) Basiskörper 6 in unterschiedlichen Stellungen auf oder an die erfindungsgemäße Vorrichtung anzulegen, oder den Basiskörper in unterschiedlichen Stellungen mit der Vorrichtung zu verbinden. Beispielsweise kann der Basiskörper gedreht und/oder versetzt werden.

Das Handhabungsgerät kann fest bzw. starr mit dem Grundkörper 3 des Systems verbunden sein. Gegebenenfalls ist das Handhabungsgerät 30 ein eigenständiges Modul, das neben dem Grundkörper 3 bzw. neben dem Gehäuse 8 der Vorrichtung platziert werden kann oder platziert ist. Gegebenenfalls sind Zentriermittel 37 vorgesehen, sodass die Lage des Handhabungsgeräts 30 gegenüber dem Basiskörper 6 festgelegt oder festlegbar ist. Diese Zentriermittel können beispielsweise Stege oder Ausnehmungen sein, in die das Handhabungsgerät 30 oder der Grundkörper 3 bzw. das Gehäuse 8 mit einer gewissen Passung eingesetzt werden kann. Gegebenenfalls weisen der Basiskörper 6 und das Handhabungsgerät 30 eine gemeinsame Grundplatte auf, über die die Zentrierung des Handhabungsgerätes 30 gegenüber dem Basiskörper 6 erfolgt.

Fig. 7 zeigt eine erfindungsgemäße Vorrichtung in zwei unterschiedlichen Stellungen. Das Handhabungsgerät umfasst einen Arm 35, der bewegbar angeordnet ist. Insbesondere ist der Arm 35 bewegbar gegenüber dem Grundkörper 3 angeordnet, sodass ein Basiskörper 6 entnommen oder bewegt werden kann.

Bevorzugt ist die Steuerung bzw. die Regelung des Handhabungsgerätes 30 mit der Steuerung bzw. Regelung der Vorrichtung zur Bildung des Objektes 1 verbunden, verbindbar oder als eine einzige Steuerung bzw. Regelung ausgebildet.

Gegebenenfalls ist die Verbindung der Steuerung durch Zusammenführen des Grundkörpers 3 und des Handhabungsgeräts 30 automatisch hergestellt. Gegebenenfalls ist das Handhabungsgerät 30 als Wechslersystem ausgebildet. Dieses kann gegebenenfalls ein Teil des erfindungsgemäßen Systems sein und/oder mit dem System kombiniert werden. Durch die Zugänglichkeit des Basiskörpers von außen ist es möglich, dass der Basiskörper samt gebildetem Objekt automatisiert entnommen wird und gegebenenfalls ein neuer Basiskörper zugeführt wird.

Ferner kann gegebenenfalls durch das Handhabungsgerät in allen Ausführungsformen eine Masse 2 zugeführt oder nachgefüllt werden. Dazu kann ein Massenreservoir mit einer vom Handhabungsgerät betätigbaren Dosiervorrichtung vorgesehen sein, wobei die Dosiervorrichtung gegebenenfalls ein Ventil und/oder eine Pumpe umfasst. Gegebenenfalls wird eine zusätzliche oder neue Masse über ein Reservoir im Basiskörper vom Handhabungsgerät zugeführt.

Gegebenenfalls umfasst das System ein Magazin zur Aufnahme oder Halterung mehrerer Basiskörper. Dieses Magazin kann gegebenenfalls in das Wechslermodul bzw. in das Handhabungsgerät integriert sein.

Fig. 8 insbesondere Fig.8a und Fig.8b zeigen bzw. zeigt eine weitere Ausführungsform eines erfindungsgemäßen Basiskörpers 6. Insbesondere ist die Ausführungsform in zwei unterschiedlichen Stellungen dargestellt. Der Basiskörper 6 umfasst mehrere Fortsätze 29. Die Fortsätze sind dazu geeignet und/oder eingerichtet, ein Objekt 1 insbesondere aus mehreren Schichten 18 anzubauen oder auf diesen aufzubauen. Um ein Entfernen des Objektes 1 von den Fortsätzen 29 bzw. von dem Basiskörper 6 zu erleichtern, ist ein Trennelement 36 vorgesehen. Dieses Trennelement 36 ist bevorzugt vor dem Aufbau des Objektes in dem Zwischenraum zwischen den Fortsätzen 29 angeordnet. Wird nun das Objekt 1 an den Fortsätzen und insbesondere an den auskragenden Enden der Fortsätze 29 angebaut, so befindet sich das Trennelement 36 zwischen dem Objekt 1 und einer Grundplatte des Basiskörpers 6. Um das Objekt 1 von dem Basiskörper 6 zu trennen, kann in weiterer Folge das Trennelement 36 in Erstreckungsrichtung der Fortsätze 29 bewegt werden. Durch das Trennelement 36 kann somit zwischen dem Objekt 1 und dem Basiskörper 6 eine Kraft ausgeübt werden, um die Haftung entlang der Verbindungsfläche zwischen Objekt 1 und Basiskörper 6 zu lösen. Dies bringt Vorteile mit sich, da eine zerstörungsfreie Entnahme des Objektes 1 von dem Basiskörper 6 erleichtert ist. In der vorliegenden Ausführungsform der Fig. 8 ist das Trennelement 36 als gitterförmiger Körper ausgebildet. Dieser gitterförmige Körper umfasst eine plattenförmige Grundstruktur, in der rasterförmig Freistellungen angeordnet sind. Die Freistellungen sind insbesondere als Durchgangsöffnungen angeordnet, die die plattenförmige Grundstruktur durchsetzen. Die Freistellungen des Trennelements 36 weisen insbesondere dieselbe Form bzw. Anordnung auf, wie die Fortsätze 29 des mit dem Trennelement 36 zusammen verwendeten Basiskörpers 6. Dadurch können die Fortsätze 29 durch die Freistellungen im Trennelement 36 hindurchgeführt werden.

Grundsätzlich eignet sich jedoch jeglicher Aufbau eines Trennelements 36 zur Verbesserung der erfindungsgemäßen Vorrichtung, bei der eine Anordnung des Trennelements 36 zwischen dem Basiskörper 6 und dem aufzubauenden Objekt ermöglicht ist. Ein derartiges Trennelement kann in allen Ausführungsformen vorgesehen sein.

Gegebenenfalls ist das Trennelement als Lochgitter in dem Basiskörper integriert oder an dem Basiskörper angelegt. Dabei kann das Trennelement durch Magnete oder dergleichen während der Bildung des Objektes mit dem Basiskörper verbunden sein. Nach dem Druckprozess kann durch abziehen des Trennelements bzw. des Lochgitters ein flächiger Druck von der Rückseite des Objektes aufgebracht werden. Dadurch können das oder die Objekte schonender vom Basiskörper gelöst werden.

Insbesondere in Kombination mit einem Handhabungsgerät kann dadurch eine automatisierte Trennung des Objektes von dem Basiskörper erfolgen. Beispielsweise könnte dadurch ein Objekt von dem Basiskörper automatisiert getrennt und gegebenenfalls in einem Behälter gelagert werden. Dies kann durch maschinellen Zug an dem Trennelement erfolgen. Gegebenenfalls verfügt das Handhabungsgerät selbst über ein Trennelement, welches durch seine Geometrie dazu geeignet ist, in Öffnungen des Basiskörpers einzugreifen, um die Teile durch flächigen Druck zu lösen.

Das Erfindungsgemäße System umfasst bevorzugt eine Strahlungsquelle, die beispielsweise wie folgt ausgeführt sein kann: Die Strahlungsquelle kann insbesondere als Projektor und/oder Beamer ausgeführt sein. Die verwendete Strahlungsquelle ist gegebenenfalls ein DLP (Digital Light Processing) Beamer. Dieser umfasst bevorzugt ein DMD=Digital Mirror Device - also ein Array aus vielen kleinen Einzelspiegeln, die einzeln angesteuert werden können und so das darauf einfallende Licht Richtung Objektiv spiegeln (entspricht einem hellen Pixel) oder auf einen Absorber (entspricht einem schwarzen Pixel) - jeder Spiegel stellt in der Regel einen Pixel dar. Gegebenenfalls weist eine Strahlungsquelle etwa 600 bis 6000 x 300 bis 3000 Pixel, bevorzugt 1280x800 Pixel auf. Zur Anwendung kommen gegebenenfalls zwei Objektive die beispielsweise eine Auflösung von 50µm und 65µm erzeugen. Damit wird das Einzelfeld beispielsweise bei 50µm 64x40mm groß, bei 65µm 83,2x52mm groß. Durch Aneinanderreihen von drei Feldern ergibt sich gegebenenfalls ein gesamtes Baufeld von 64x120mm (50µm) bzw. 83,2x156mm (65µm). Bei Verwendung zweier Strahlungsquellen, insbesondere zweier Strahlungsquellen gemäß oben angeführter Ausgestaltung, ist das Feld gegebenenfalls bei 50µm 128x120mm groß.
Die bei der exemplarisch angeführten Ausgestaltung der Strahlungsquelle verwendete LED hat beispielsweise eine Leistung von 1W bis 20W.

Eine exemplarische Masse kann beispielsweise eine Monomermasse eines Monomers oder mehrerer unterschiedlicher Monomere umfassen oder sein. Gegebenenfalls umfasst die Masse auch anorganische Partikel, metallische Partikel, keramische Partikel, Farbstoffe, Additive, Füllstoffe und/oder Farbstoffe. Beispielhafte Massen können beispielsweise Acrylate oder Methacrylate sein. Die Masse ist bevorzugt durch Strahlung zu einem Polymer verfestigbar. Alle einsetzbaren Massen haben bevorzugt gemein, dass der nicht formstabile, insbesondere flüssige oder pastöse Ausgangsstoff der Masse mit einem Photoinitiator angereichert ist. Dieser Photoinitiator wandelt das auf ihn treffende Licht oder die auf ihn treffende Strahlung der Strahlungsquelle chemisch um, wodurch die Polymerisation und damit die Verfestigung erfolgt oder angeregt wird.

Gegebenenfalls kann die Strahlungsquelle unterhalb der Wanne in XY-Richtung bevorzugt waagrecht verfahren werden. Gegebenenfalls können in allen Ausführungsformen statt LED auch andere halbleiterbasierte Strahlungs- oder Lichtquellen eingesetzt werden. Gegebenenfalls können in allen Ausführungsformen Laserdioden in den Strahlungsquellen eingesetzt werden. Diese können beispielsweise gepulst oder kontinuierlich abstrahlen. Die Pulslängen können sehr kurz sein z.B. im Picosekundenbereich oder im Femtosekundenbereich. Gegebenenfalls können in allen Ausführungsformen die Wellenlängen der emittierten Strahlung vom Infrarotbereich bis hin zum ultravioletten Bereich reichen, insbesondere ein schmales Frequenzspektrum wie beispielsweise ausschließlich UV-Strahlung oder IR-Strahlung oder ein breites Frequenzspektrum bis hin zu aktinischer Strahlung umfassen oder sein. Gegebenenfalls können in allen Ausführungsformen zur Bildprojektion mehrere Optiken mit dezidierten Auflösungen eingesetzt werden. Gegebenenfalls kann auch ein variables Objektiv, bei welchem die Projektionsfläche stufenlos oder in Stufen einstellbar ist, eingesetzt werden. Gegebenenfalls können in allen Ausführungsformen dazu auch ein oder mehrere DMDs oder direkt emittierende Displaylösungen wie z.B. LED oder OLED-Displays eingesetzt werden.

Das erfindungsgemäße System umfasst bevorzugt mehrere Komponenten. Diese Komponenten können beispielsweise die Wanne 9, das Gehäuse 8, der Basiskörper 6, die Bewegungsvorrichtung 10, die Anzeigevorrichtung 24, die Strahlungsquelle 4, der Strahlungsquellenantrieb 26, das Handhabungsgerät 30, und/oder das Objekt 1 sein. Mehrere dieser Komponenten bewirken zusammen einen synergetischen Effekt und bilden insbesondere ein erfindungsgemäßes System.

Gemäß einer bevorzugten Ausführungsform sind alle der genannten Komponenten in dem erfindungsgemäßen System vorgesehen. Die einzelnen Komponenten können in unterschiedlichen Ausführungsformen ausgeführt sein. Beispielsweise können eine oder mehrere Strahlungsquellen vorgesehen sein. Beispielsweise kann die Wanne mehrere Teilwannen oder eine einzige Wanne sein. Beispielsweise kann der Basiskörper ein eigenständiger Körper wie insbesondere ein Objektträger sein. Gemäß einer abgewandelten Ausführungsform kann der Basiskörper ein auf oder durch das System hergestelltes Objekt sein.

Gemäß einer nicht dargestellten Ausführungsform ist das Objekt 1 ein Teil eines Stempels oder ein Stempel. Insbesondere ist als Stempel ein Objekt bezeichnet, das eine Stempelfläche aufweist, die bevorzugt mit einer reliefartigen Struktur versehen ist. Durch Benetzen der Stempelfläche mit Farbe und Abdrücken auf ein Substrat kann dadurch die reliefartige Form auf ein Substrat abgedrückt werden. Gemäß dieser Anwendung des erfindungsgemäßen Systems, kann die Stempelfläche und insbesondere die Stempelplatte, die die Stempelfläche trägt, durch selektives bereichsweises Verfestigen einer nicht formstabilen Masse gebildet werden. Gegebenenfalls ist die Stempelfläche durch das aufgebaute Objekt gebildet. Gegebenenfalls ist der Basiskörper ein Teil des Stempels und somit ein Teil des fertigen Produktes. Beispielsweise kann ein Stempelgriff als Basiskörper mit der Haltevorrichtung verbunden oder von der Haltevorrichtung gehalten werden. In weiterer Folge wird durch das erfindungsgemäße System die Stempelfläche und gegebenenfalls die Stempelplatte aufgebaut bzw. gebildet. Der als Stempelgriff ausgebildete Basiskörper kann dabei von außen an das Gehäuse bzw. an die Haltevorrichtung des erfindungsgemäßen Systems angelegt oder aufgesetzt sein, und sich insbesondere nach außen erstrecken. Nach fertig gebildeter Stempelfläche kann der Stempelgriff, der dem Basiskörper entspricht, einfach nach außen abgehoben werden. Der Basiskörper ist bei dieser Ausführungsform ein Teil des fertigen Produktes, insbesondere ein Teil des fertigen Stempels. Bevorzugt ist der Basiskörper bzw. der als Stempelgriff ausgebildete Basiskörper von der Haltevorrichtung gehalten.

Gegebenenfalls kann auch der Stempelgriff durch das erfindungsgemäße System aufgebaut werden oder sein. Hierzu kann beispielsweise eine erste Masse vorgesehen sein, die bei Verfestigung eine im Wesentlichen starre oder harte Konsistenz hat. Aus dieser ersten Masse kann schichtweise ein Stempelgriff aufgebaut werden. In einem nächsten Schritt kann der gebildete Stempelgriff in eine zweite Masse eingetaucht oder an eine zweite Masse angelegt werden. Diese zweite Masse weist nach Verfestigung eine formstabile aber elastische, beispielsweise gummiartige Konsistenz auf, wie sie von Stempelflächen bekannt ist. Durch dieses zweiteilige Bilden eines einzigen Objektes, kann ein Stempel aus unterschiedlichen Materialien durch das erfindungsgemäße System im Wesentlichen in einem Arbeitsgang hergestellt werden.

Gegebenenfalls ist die Handhabungsvorrichtung dazu eingerichtet, einen Wechsel der Massen vorzunehmen, um insbesondere den Basiskörper von der einen Masse zur anderen Masse zu bewegen.

Gegebenenfalls wird durch das erfindungsgemäße System ein plattenförmig ausgebildeter Basiskörper mit der Stempelfläche versehen. Dieser plattenförmige Körper kann in weiterer Folge mit einem Stempelgriff verbunden werden.

### Bezugszeichenliste

- 1: Objekt
- 2: Masse
- 3: Grundkörper
- 4: Strahlungsquelle
- 5: Strahlung
- 6: Basiskörper
- 7: Haltevorrichtung
- 8: Gehäuse
- 9: Wanne
- 10: Bewegungsvorrichtung
- 11: Antrieb
- 12: erster Gehäuseteil
- 13: zweiter Gehäuseteil
- 14: Boden der Wanne
- 15: Erste Stellung
- 16: Zweite Stellung
- 17: Zurückgelegter Weg
- 18: Verbundene Schichten
- 19: Überlappungsstrecke
- 20: Gehäuseöffnung
- 21: Führungsvorrichtungen
- 22: Trennstege
- 23: Teilwannen
- 24: Anzeigevorrichtung
- 25: Bedienelement
- 26: Strahlungsquellenantrieb
- 27: Verbindungselement der Wanne
- 28: Griff der Wanne
- 29: Fortsatz des Basiskörpers
- 30: Handhabungsgerät
- 31: Freistellung (Verbindungselement der Wanne)
- 32: Magnetische Elemente
- 33: Reservoir
- 34: Zuführöffnungen
- 35: Arm des Handhabungsgerätes
- 36: Trennelement
- 37: Zentriermittel
- 38: Rahmen / rahmenförmige Komponente
- 39: Freistellung des Rahmens

## Patentansprüche

1. System zum Bilden eines oder mehrerer formstabiler Objekte (1) durch selektives bereichsweises Verfestigen einer nicht formstabilen Masse (2), wie insbesondere einer lichtaushärtbaren Flüssigkeit, umfassend:
- einen Grundkörper (3), der insbesondere ortsfest angeordnet ist;
- eine mit dem Grundkörper (3) verbindbare oder verbundene Wanne (9) zur Aufnahme der Masse (2);
- eine oder mehrere steuerbare Strahlungsquelle(n) (4) zur Abgabe einer Strahlung (5), die zur Verfestigung der Masse (2) geeignet ist und die insbesondere als Lichtquelle ausgebildet ist;
- einen Basiskörper (6), auf dem das zu bildende Objekt (1) aufbaubar ist oder aufgebaut wird,
- eine Haltevorrichtung (7) zur Aufnahme oder Halterung des Basiskörpers (6);
- ein Gehäuse (8), das zumindest die Wanne (9) und bevorzugt auch die Strahlungsquelle (4) umgibt;
- eine Bewegungsvorrichtung (10), die mit dem Grundkörper (3) und mit der Haltevorrichtung (7) verbunden oder gekoppelt ist, wobei die Bewegungsvorrichtung (10) einen Antrieb (11) umfasst, sodass die Haltevorrichtung (7) durch Betätigung des Antriebs (11) gegenüber dem Grundkörper (3) bewegbar ist,
**dadurch gekennzeichnet,**
**dass** das Gehäuse (8) mehrteilig ausgebildet ist, wobei ein erster Gehäuseteil (12) mit dem Grundkörper (3) verbunden ist und ein zweiter Gehäuseteil (13) mit der Haltevorrichtung (7) verbunden ist, sodass bei Relativbewegung der Haltevorrichtung (7) gegenüber dem Grundkörper (3) eine Relativbewegung zwischen erstem Gehäuseteil (12) und zweitem Gehäuseteil (13) bewirkt ist, und dass sich der in der Haltevorrichtung (7) gehaltene oder aufgenommene Basiskörper (6) nach außen erstreckt und/oder von außen zugänglich ist.

2. System nach Anspruch 1, **dadurch gekennzeichnet,**
- **dass** die Wanne (9) nach oben geöffnet ist,
- **dass** die Wanne (9) einen für die Strahlung (5) der Strahlungsquelle (4) durchlässigen Boden (14), insbesondere einen lichtdurchlässigen oder transparenten Boden (14) aufweist,
- **dass** die Masse (2) in der Wanne (9) angeordnet oder anordenbar ist,
- **dass** der in der Haltevorrichtung (7) gehaltene oder angeordnete Basiskörper (6) zum Bilden eines oder mehrerer formstabiler Objekte von oben in die Masse (2) eingetaucht oder an die Masse (2) angelegt ist,
- **dass** die Strahlungsquelle(n) (4) unterhalb der Wanne (9) angeordnet und durch den Boden (14) der Wanne (9) Richtung Basiskörper (6) gerichtet ist oder sind,
- und **dass** zum Bilden eines oder mehrerer formstabiler Objekte die zwischen dem Boden (14) der Wanne (9) und dem Basiskörper (6) vorgesehene Masse (2) durch selektives bereichsweises Bestrahlen durch die Strahlungsquelle(n) (4) verfestigbar ist oder verfestigt wird.

3. System nach Anspruch 1 oder 2, **dadurch gekennzeichnet, dass** die Wanne (9) einen oder mehrere Trennstege (22) umfasst, sodass zwei oder mehrere voneinander seitlich abgeteilte Teilwannen (23) gebildet sind.

4. System nach einem der Ansprüche 1 bis 3, **dadurch gekennzeichnet, dass** in zumindest zwei Teilwannen (23) unterschiedliche Massen (2', 2") angeordnet sind, wobei sich die unterschiedlichen Massen (2', 2") beispielsweise durch unterschiedliche Zusammensetzungen, unterschiedliche Farben, unterschiedliche Füllstoffe, unterschiedliche Additive und/oder unterschiedliche Viskosität unterscheiden.

5. System nach einem der Ansprüche 1 bis 4, **dadurch gekennzeichnet, dass** die Strahlungsquelle (4) in einer zur aufzubauenden Schicht des Objektes (1) parallelen Ebenen bewegbar und insbesondere angetrieben verfahrbar ist, sodass mehrere nebeneinander angeordnete Teilbereiche der Schicht nacheinander verfestigbar und miteinander verbindbar sind.

6. System nach einem der Ansprüche 1 bis 5, **dadurch gekennzeichnet, dass** mehrere Strahlungsquellen (4) vorgesehen sind, und dass gegebenenfalls eine oder mehrere Strahlungsquellen (4) in einer zur aufzubauenden Schicht des Objektes (1) parallelen Ebenen bewegbar und insbesondere angetrieben verfahrbar ist oder sind.

7. System nach einem der Ansprüche 1 bis 6, **dadurch gekennzeichnet, dass** ein Handhabungsgerät (30) vorgesehen ist, das zumindest einen bewegbaren Arm (35) umfasst, dass der Arm (35) des Handhabungsgerätes (30) mit dem Basiskörper (6) koppelbar oder gekoppelt ist, sodass durch Bewegung des Armes (35) des Handhabungsgerätes (30) auch der Basiskörper (6) bewegbar ist.

8. System nach Anspruch 7, **dadurch gekennzeichnet, dass** der Arm (35) gegenüber dem Grundkörper zumindest einen bevorzugt zwei angetriebene Freiheitsgrade aufweist, sodass der Basiskörper (6) gegenüber der Haltevorrichtung (7) bewegbar ist, wobei die Bewegung eine Drehbewegung um eine vertikale Achse, eine translatorische Hubbewegung zum Abheben des Basiskörpers (6) von der Haltevorrichtung (7), eine translatorische Senkbewegung zum Aufsetzen des Basiskörpers (6) auf die Haltevorrichtung (7) und/oder eine Schwenkbewegung zur Entfernung des Basiskörpers (6) von der Haltvorrichtung (7) und dem Grundkörper (3) ist.

9. System nach Anspruch 7 oder 8, **dadurch gekennzeichnet, dass** zumindest ein Teil des Handhabungsgeräts (30) starr mit dem Grundkörper (3) verbunden ist, oder dass das Handhabungsgerät (30) ein eigenständiges Modul ist, das über ein oder mehrere Zentriermittel zumindest teilweise gegenüber dem Grundkörper (3), dem Basiskörper (6) oder der Haltevorrichtung (7) lagezentriert ist.

10. System nach einem der Ansprüche 3 bis 9, **dadurch gekennzeichnet, dass** die Teilwannen (23) seitlich voneinander durch einen oder mehrere Trennstege (22) abgetrennt sind, sodass eine selbsttätige Durchmischung einer ersten Masse (2'), die in der ersten Teilwanne (23') vorgesehen ist und einer zweiten Masse (2"), die in einer zweiten Teilwanne (23") vorgesehen ist, verhindert ist.

11. System nach einem der Ansprüche 3 bis 10, **dadurch gekennzeichnet, dass** der oder die Trennstege (22) einstückig mit der Wanne (9) verbunden sind, oder dass der oder die Trennstege (22) form- oder stoffschlüssig mit der Wanne (9) verbunden sind oder werden.

12. System nach einem der Ansprüche 1 bis 11, **dadurch gekennzeichnet, dass** zur Verbindung der Wanne (9) mit dem Grundkörper (3) Verbindungselemente (27) vorgesehen sind, wobei die Verbindungselemente (27) Freistellungen (31) umfassen, wobei diese Freistellungen (31) insbesondere dazu eingerichtet und/oder geeignet sind, mit Elementen des Grundkörpers (3) verbunden zu werden, wobei die Elemente des Grundkörpers (3), die in die Verbindungselemente (27) der Wanne eingreifen, gegebenenfalls bewegbar angeordnet sind, sodass ein Spannen der Wanne, ein Wölben der Wanne, ein Verschieben der Wanne und/oder ein Entspannen der Wanne über Bewegung der Elemente des Grundkörpers erfolgen kann.

13. System nach Anspruch 12, **dadurch gekennzeichnet, dass** die Verbindungselemente (27) magnetische oder magnetisierbare Elemente (32) aufweisen, wobei diese Elemente (32) insbesondere dazu eingerichtet sind, eine magnetische Verbindung der Wanne (9) mit dem Grundkörper (3) zu ermöglichen.

14. System nach Anspruch 12 oder 13, **dadurch gekennzeichnet, dass** die Freistellungen (31) vertikal von unten in die Seitenbereiche der Wanne (9) verlaufen, wobei die Seitenbereiche der Wanne insbesondere seitlich auskragenden Laschen sind.

15. System nach einem der Ansprüche 12 bis 14, **dadurch gekennzeichnet, dass** die Freistellungen (31) Hinterschneidungen aufweisen, die insbesondere im Wesentlichen waagrecht in das Wannenmaterial verlaufen, sodass über Hakenelemente eine Arretierung der Wanne (9) gegenüber dem Grundkörper (3) erfolgen kann.

## Claims

1. System to form one or a plurality of dimensionally stable objects (1) by means of selectively solidifying a non-dimensionally stable mass (2) in sections, such as, in particular a liquid that can be hardened using light, comprising:
- a main body (3), which is, in particular, arranged in a stationary manner,
- a tub (9) that is connected or can be connected to the main body (3) to hold the mass (2),
- one or a plurality of controllable source (s) of radiation (4) to emit a beam (5), which is appropriate for solidifying the mass (2) and that is, in particular, designed as a light source,
- a base body (6), on which the object (1) be formed can be built up or is built up,
- a holding apparatus (7) to hold or mount the base body (6),
- a housing (8), which surrounds at least the tub (9) and preferably also the source of radiation (4),
- a moving apparatus (10), which is connected to or coupled with the main body (3) and the holding apparatus (7), wherein the moving apparatus (10) comprises a drive (11) so that the holding apparatus (7) can be moved with relation to the main body (3) by actuating the drive (11),
**characterized in that**
the housing (8) is made of multiple parts, wherein a first housing part (12) is connected to the main body (3) and a second housing part (13) is connected to the holding apparatus (7) so that, in the case of a relative movement of the holding apparatus (7) with relation to the main body (3), a relative movement between a first housing part (12) and a second housing part (13) is caused and that the base body (6) held or accommodated in the holding apparatus (7) extends outwardly and/or is accessible from the outside.

2. System according to claim 1, **characterized in that**
- the tub (9) is open toward the top,
- that the tub (9) comprises a floor (14) that is permeable to radiation (5) of the source of radiation (4), in particular, a light-permeable or a transparent floor (14),
- the mass (2) is arranged or can be arranged in the tub (9),
- the base body (6) arranged or held in the holding apparatus (7) to form one or a plurality of dimensionally stable objects dipped into the mass (2) from the top or is applied onto the mass (2),
- the source(s) of radiation (4) is or are arranged under the tub (9) and is or are directed through the floor (14) of the tub (9) in the direction of the base body (6),
- and that, to form one or a plurality of dimensionally stable objects, the mass (2) provided between the floor (14) of the tub (9) and the base body (6) can be solidified or is solidified by means of selectively radiating in sections using the source(s) of radiation (4).

3. System according to claim 1 or 2, **characterized in that** the tub (9) comprises one or a plurality of separation bars (22) so that two or a plurality of separate sub-tubs (23) laterally sectioned from one another are formed.

4. System according to one of the claims 1 to 3, **characterized in that** different masses (2', 2'') are arranged in at least two sub-tubs (23), wherein the different masses (2', 2") differ for example due to different compositions, different colours, different fillers, different additives and/or different viscosity levels.

5. System according to any one of the claims 1 to 4, **characterized in that** the source (s) of radiation (4) can be moved on levels parallel to the layer of the object (1) to be built up and, in particular, can be moved in a driven manner so that a plurality of subsections of the layer arranged adjacent to one another can be successively solidified and can be connected to one another.

6. System according to any one of the claims 1 to 5, **characterized in that** a plurality of sources of radiation (4) are provided and that, if required, one or a plurality of sources of radiation (4) can be moved on levels parallel to the layer of the object (1) to be built up and, in particular, can be moved in a driven manner.

7. System according to one of the claims 1 to 6, **characterized in that** a handling device (30) is provided that comprises at least one moveable arm (35), that the arm (35) of the handling device (30) can be coupled or is coupled with the base body (6) so that the base body (6) can also be moved by moving the arm (35) of the handling device (30).

8. System according to claim 7, **characterized in that** the arm (35) comprises at least one, preferably two driven degrees of freedom with relation to the main body, so that the base body (6) can be moved with relation to the holding apparatus (7), wherein the movement is a rotary movement around a vertical axis, a translational lifting movement to lift the base body (6) from the holding apparatus (7), a translational lowering movement to set the base body (6) onto the holding apparatus (7) and/or a swivel movement to remove the base body (6) from the holding apparatus (7) and the main body (3).

9. System according to claim 7 or 8, **characterized in that** at least one part of the handling device (30) is rigidly connected to the main body (3) or that the handing device (30) is an independent module, which is at least partially positionally centred via one or a plurality of centring means with relation to the main body (3), the base body (6) or the holding apparatus (7) .

10. System according to one of the claims 3 to 9, **characterized in that** the sub-tubs (23) are laterally separated from each other by means of one or a plurality of separation bars (22) so that an automatic mixing of a first mass (2'), which is provided in the first sub-tub (23') and a second mass (2"), which is provided in a second sub-tub (23''), is prevented.

11. System according to one of the claims 3 to 10, **characterized in that** the separation bar(s) (22) is or are connected to the tub (9) as a single piece or that the separation bar(s) (22) is or are connected to the tub (9) in a positive-locking or a firmly bonded manner.

12. System according to one of the claims 1 to 11, **characterized in that**, in order to connect the tub (9) to the main body (3), connection elements (27) are provided, wherein the connection elements (27) comprise cut-outs (31), wherein these cut-outs (31) are particularly set up and/or appropriate to be connected to elements of the main body (3), wherein the elements of the main body (3), which engage into the connection elements (27) of the tub, are optionally arranged in a moveable manner so that tensioning the tub, bending the tub, moving the tub and/or relieving stress on the tub can take place by moving the elements of the main body.

13. System according to claim 12, **characterized in that** the connection elements (27) comprise magnetic or magnetizable elements (32), wherein these elements (32) are, in particular, set up to make a magnetic connection of the tub (9) to the main body (3) possible.

14. System according to claim 12 or 13, **characterized in that** the cut-outs (31) run vertically from the bottom in to the side areas of the tub (9), wherein the side areas of the tub are, in particular, laterally projecting tabs.

15. System according to one of the claims 12 to 14, **characterized in that** the cut-outs (31) comprise undercuts, which, in particular, primarily run horizontally into the tub material so that a locking of the tub (9) with relation to the main body (3) can take place via the hook elements.

## Revendications

1. Système pour former un ou plusieurs objet(s) (1) à forme stable par solidification sélective par tronçons d'une masse (2) à forme non stable, comme en particulier un liquide photo-durcissable, comprenant :
- un corps de fond (3) qui est disposé de manière fixe en particulier ;
- une cuve (9) pouvant être reliée ou reliée au corps de fond (3) pour recevoir la masse (2) ;
- une ou plusieurs source(s) de rayonnement (4) pouvant être commandée(s) pour émettre un rayonnement (5) qui est approprié pour solidifier la masse (2) et qui est conçu en particulier en tant que source de lumière ;
- un corps de base (6) sur lequel l'objet (1) à former peut être ou est monté,
- un dispositif de retenue (7) pour recevoir ou retenir le corps de base (6) ;
- un logement (8) qui entoure au moins la cuve (9) et de préférence aussi la source de rayonnement (4) ;
- un dispositif de déplacement (10) qui est relié ou couplé au corps de fond (3) et au dispositif de retenue (7), dans lequel le dispositif de déplacement (10) comprend un entraînement (11), de sorte que le dispositif de retenue (7) est mobile par rapport au corps de fond (3) par actionnement de l'entraînement (11),
**caractérisé en ce que**
le logement (8) est conçu en plusieurs parties, dans lequel une première partie de logement (12) est reliée au corps de fond (3) et une deuxième partie de logement (12) est reliée au dispositif de retenue (7), de sorte que lors du mouvement relatif du dispositif de retenue (7) par rapport au corps de fond (3), un mouvement relatif entre la première partie de logement (12) et la deuxième partie de logement (13) est effectué, et que le corps de base (6) retenu ou reçu dans le dispositif de retenue (7) s'étend vers l'extérieur et/ou est accessible par l'extérieur.

2. Système selon la revendication 1, **caractérisé en ce que**
- la cuve (9) est ouverte vers le haut,
- la cuve (9) présente un fond (14) perméable pour le rayonnement (5) de la source de rayonnement (4), en particulier un fond perméable à la lumière ou transparent,
- la masse (2) est ou peut être disposée dans la cuve (9),
- le corps de base (6) retenu ou reçu dans le dispositif de retenue (7) est plongé par le haut dans la masse (2) pour former un ou plusieurs objet(s) à forme stable ou est placé sur la masse (2),
- que la/les source (s) de rayonnement (4) est/sont disposée(s) sous la cuve (9) et dirigée(s) par le fond (14) de la cuve (9) en direction du corps de base (6),
- et que pour former un ou plusieurs objet(s) à forme stable, la masse (2) prévue entre le fond (14) de la cuve (9) et le corps de base (6) peut être ou est fixée par rayonnement sélectif par tronçons par la/les source(s) de rayonnement (4).

3. Système selon la revendication 1 ou 2, **caractérisé en ce que** la cuve (9) comprend une ou plusieurs branche(s) de séparation (22), de sorte que deux ou plusieurs cuves partielles (23) séparées latéralement l'une de l'autre sont formées.

4. Système selon l'une des revendications 1 à 3, **caractérisé en ce que** des masses différentes (2', 2") sont disposées dans au moins deux cuves partielles (23), dans lequel les masses différentes (2', 2") se différencient par exemple par des compositions différentes, des couleurs différentes, des charges différentes, des additifs différents et/ou une viscosité différente.

5. Système selon l'une des revendications 1 à 4, **caractérisé en ce que** la source de rayonnement (4) est mobile et peut être en particulier déplacée en étant entraînée, dans un plan parallèle à la couche à monter de l'objet (1), de sorte que plusieurs parties disposées l'une à côté de l'autre de la couche peuvent être fixées l'une après l'autre et reliées entre elles.

6. Système selon l'une des revendications 1 à 5, **caractérisé en ce que** plusieurs sources de rayonnement (4) sont prévues et que le cas échéant, une ou plusieurs source(s) de rayonnement (4) est ou sont mobile (s) et peu(ven)t en particulier être déplacée(s) en étant entraînée(s), dans un plan parallèle à la couche à monter de l'objet (1) .

7. Système selon l'une des revendications 1 à 6, **caractérisé en ce qu'**un appareil de manipulation (30) est prévu, qui comprend au moins un bras mobile (35), que le bras (35) de l'appareil de manipulation (30) est ou peut être couplé au corps de base (6), de sorte que le corps de base (6) est également mobile par le mouvement du bras (35) de l'appareil de manipulation (30).

8. Système selon la revendication 7, **caractérisé en ce que** le bras (35) présente par rapport au corps de fond au moins un, de préférence deux degrés de libertés entraînés, de sorte que le corps de base (6) est mobile par rapport au dispositif de retenue (7), dans lequel le mouvement est un mouvement de rotation sur un axe vertical, un mouvement de levée en translation pour soulever le corps de base (6) du dispositif de retenue (7), un mouvement d'abaissement en translation pour placer le corps de base (6) sur le dispositif de retenue (7) et/ou un mouvement de bascule pour éloigner le corps de base (6) du dispositif de retenue (7) et du corps de fond (3).

9. Système selon la revendication 7 ou 8, **caractérisé en ce qu'**au moins une partie de l'appareil de manipulation (30) est reliée fixement au corps de fond (3) ou que l'appareil de manipulation (30) est un module autonome, qui est centré en position au moins partiellement par rapport au corps de fond (3), au corps de base (6) ou au dispositif de retenue (7) par un ou plusieurs moyen(s) de centrage.

10. Système selon l'une des revendications 3 à 9, **caractérisé en ce que** les cuves partielles (23) sont séparées latéralement l'une de l'autre par une ou plusieurs branche(s) de séparation (22), de sorte qu'un mélange automatique d'une première masse (2) qui est prévue dans la première cuve partielle (23') et d'une deuxième masse (2") qui est prévue dans la deuxième cuve partielle (23") est empêché.

11. Système selon l'une des revendications 3 à 10, **caractérisé en ce que** la/les branche(s) de séparation (22) est/sont reliée(s) d'une seule pièce à la cuve (9), ou que la/les branche (s) de séparation (22) est/sont reliée(s) par complémentarité de formes ou de matières avec la cuve (9).

12. Système selon l'une des revendications 1 à 11, **caractérisé en ce que** des éléments de liaison (27) sont prévus pour relier la cuve (9) au corps de fond (3), dans lequel les éléments de liaison (27) présentent des positions libres (31), dans lequel ces positions libres (31) sont en partie conçues et/ou appropriées pour être reliées à des éléments du corps de fond (3), dans lequel les éléments du corps de fond (3) qui se mettent en prise dans les éléments de liaison (27) de la cuve sont disposés mobiles le cas échéant, de sorte qu'une tension de la cuve, un bombement de la cuve, un déplacement de la cuve et/ou une détente de la cuve peut être effectué par le mouvement des éléments du corps de fond.

13. Système selon la revendication 12, **caractérisé en ce que** les éléments de liaison (27) présentent des éléments (32) magnétiques ou magnétisables, dans lequel ces éléments (32) sont en particulier conçus pour permettre une liaison magnétique de la cuve (9) avec le corps de fond (3).

14. Système selon la revendication 12 ou 13, **caractérisé en ce que** les positions libres (31) passent verticalement dans les parties latérales de la cuve (9) par le bas, dans lequel les parties latérales de la cuve sont en particulier des brides faisant saillie latéralement.

15. Système selon l'une des revendications 12 à 14, **caractérisé en ce que** les positions libres (31) présentent des contre-dépouilles qui passent essentiellement horizontalement dans le matériau de la cuve, de sorte qu'un blocage de la cuve (9) par rapport au corps de fond (3) peut être effectué par des éléments de crochet.
